# EUROPÄISCHE PATENTSCHRIFT

(11) **EP 2 542 600 B1**
(45) Veröffentlichungstag und Bekanntmachung des Hinweises auf die Patenterteilung: **26.03.2014**
(21) Anmeldenummer: 11704638.3
(22) Anmeldetag: 25.02.2011
(51) Int. Cl.: C08G 18/08, C08G 18/12, C08G 18/32, C08G 18/34, C08G 18/65, C08G 18/67, C08G 18/68, C08G 18/75, C09D 175/14

(54) **WÄSSRIGE POLYURETHANDISPERSIONEN**
AQUEOUS POLYURETAHNE DISPERSIONS
DISPERSIONS AQUEUX DE POLYURETHANE

(30) Priorität: 02.03.2010 DE 102010009896
(43) Veröffentlichungstag der Anmeldung: 09.01.2013
(73) Patentinhaber: Bayer Intellectual Property GmbH, 40789 Monheim (DE)
(72) Erfinder: SOMMER, Stefan, 51375 Leverkusen (DE); LUEHMANN, Erhard, 29699 Bomlitz (DE); FLORES, Julián, 08902 Hospitalet de Llobregat Barcelona (ES)
(74) Vertreter: BIP Patents
(86) Internationale Anmeldenummer: PCT/EP2011/052783
(87) Internationale Veröffentlichungsnummer: WO 2011/107398

(56) Entgegenhaltungen:
- EP-A1- 1 591 502
- EP-A1- 1 958 974
- EP-A1- 2 218 739
- US-A1- 2003 232 955

## Beschreibung

Die vorliegende Erfindung beschreibt oxidativ härtbare und strahlungshärtbare Beschichtungsmittel auf der Basis wässriger Polyurethandispersionen, ein Verfahren zu deren Herstellung, die Verwendung der Beschichtungsmittel als Lacke und / oder Klebstoffe sowie Gegenstände und Substrate, versehen mit diesen Lacken und / oder Klebstoffen.

Strahlungshärtbare, wässrige Beschichtungssysteme auf der Basis von Polyurethandispersionen finden Anwendung in der Beschichtung unter anderem von Holz, Kunststoffen und Leder und zeichnen sich durch eine Vielzahl positiver Eigenschaften, wie guter Chemikalienbeständigkeit und mechanische Stabilität, aus. Ein besonderer Vorteil ist die sekundenschnelle Aushärtung der Polyurethandeckschicht durch Quervernetzung der im Polymer enthaltenen ethylenischen Doppelbindungen mit Hilfe energiereicher Strahlung. Ein weiterer Vorteil wässriger Beschichtungssysteme ist die niedrige Viskosität. Diese ist besonders vorteilhaft für Sprühapplikationen.

Ein aktueller Trend, insbesondere in der Möbelindustrie ist es, wässrige, strahlenhärtbare Polyurethandispersionen in weiß, schwarz oder farbig getönten, pigmentierten Formulierungen einzusetzen. Dabei erweisen sich bestimmte Farbtöne, wie z. B. Gelb, Rot oder Schwarz, als besonders schwierig, da sie eine sehr starke Absorption in Wellenlängenbereichen besitzen, in denen die marktüblichen Photoinitiatoren Strahlung absorbieren. Die Folge ist, dass die strahlungsinduzierte Polymerisation unvollständig verläuft und die Beschichtung sehr leicht mechanisch oder chemisch zerstört werden kann. Zudem wird keine gute Haftung zum Substrat erreicht, weil die untersten Lackschichten weich bleiben (Garrat, P. G., Strahlenhärtung, 1996, S. 115-131, Vincentz Verlag, Hannover).

EP-A 753 531 und EP-A 942 022 beschreiben Polyurethanacrylatdispersionen unter anderem auf der Basis von Polyepoxy(meth)acrylaten. Die Kombination mit Polyesterpolyolen wird beschrieben, aber nicht die Kombination mit ungesättigten Fettsäuren enthaltenden Polyestern. Die beschriebenen Bindemittel härten nur unzureichend in farbig pigmentieren Formulierungen, so dass die Beständigkeiten gegen Chemikalien oder mechanische Einflüsse mangelhaft sind.

EP-A 1 914 253 offenbart Polyurethanacrylatdispersionen basierend auf Cyclopentadien-modifizierten Polyestern. Die Cyclopentadien-modifizierten Polyester können unter anderem auch Sojaölfettsäure oder Ölsäure (a2) enthalten, sind aber nicht essentiell. Als Acrylat-haltige Bausteine dienen unter anderem Polyepoxy(meth)acrylate. Die Kombination von aromatischen Polyepoxy(meth)acrylaten mit ungesättigten Fettsäuren enthaltenden Polyestern wird nicht offenbart. Die in EP- A 1 914 253 beschriebenen Bindemittel besitzen in farbig pigmentierten Formulierung ein unzureichendes Eigenschaftsprofil (s. Beispiel 6 in dieser Anmeldung).

EP-A 613 915 offenbart Polyurethanacrylatdispersionen enthaltend 20 bis 80 % Polyethylenglykoleinheiten, ungesättigte Fettalkohole oder ungesättigte Säuren enthaltende Ester. Ungesättigte Fettalkohole oder ungesättigte Säuren enthaltende Ester werden durch Umsetzung von ungesättigten Fettsäuren oder Acrylsäure mit Glycidylestern erreicht. Aromatische Poly-epoxy(meth)acrylate werden nicht beschrieben. Zudem ist dem Fachmann ersichtlich, dass der sehr hohe Anteil an Polyethylenglykoleinheiten zu sehr hydrophilen und damit gegenüber färbenden Agenzien und Lösungsmitteln anfälligen Beschichtungen führt.

WO-A 2006047431 beschreibt strahlenhärtbare und nicht-strahlenhärtbare Polyurethandispersionen enthaltend Polyester auf der Basis hydroformylierter, ungesättigter Fettsäuren. Durch die Hydroformylierung werden die Doppelbindungen der ungesättigten Fettsäuren entweder hydroformyliert oder hydriert. Damit liegen in den Polyurethandispersionen zur oxidativen Härtung keine Doppelbindungen mehr vor.

In WO-A 2005021615 werden in einem ersten Schritt ungesättigte Fettsäuren B) an aromatische Epoxide A) addiert, in einem zweiten Schritt mit (Meth)acrylat-Monomeren C) ein Polyacrylat auf die Doppelbindungen der Fettsäuren aufgepfropft und schließlich das so gewonnene Produkt als Edukt für eine strahlenhärtbare Polyurethanacrylatdispersion verwendet. Als strahlenhärtbare Komponente D) werden in der Synthese der Polyurethanacrylatdispersion (Meth)acrylatMonomere, wie Hydroxyethyl- und Hydroxypropyl(meth)acrylat, eingesetzt. Da die Doppelbindungen der ungesättigten Fettsäuren mit (Meth)acrylat-Monomeren copolymerisiert wurden, liegen in der Polyurethandispersion zur oxidativen Härtung keine Doppelbindungen mehr vor.

Oxidativ trocknende Lackharze auf der Basis ungesättigter Fettsäuren und Öle sind als Alkydharze bekannt (Brock, T.; Groteklaes, M.; Mischke, P., Lehrbuch der Lacktechnologie, 1. Aufl.; Vincentz: Hannover, 2000, S. 62-65). Es handelt sich dabei um nicht-wässrige Systeme, die aufgrund der hohen Viskosität mit organischen Lösungsmitten bzw. niedermolekularen Reaktivverdünnern verdünnt werden müssen, um für Sprühapplikationen eingesetzt zu werden. Nachteilig ist die Emission organischer Bestandteile und/oder die Kennzeichnung als reizend.

Oxidativ trocknende, wässrige Polyurethandispersionen auf der Basis von Alkydharzen werden in DE-A 19917161 und DE-A 102006054237 beschrieben. Die daraus hergestellten Lacke werden bei Raumtemperatur oder bei erhöhter Temperatur über mehrere Stunden bis Tage mit Luftsauerstoff ggf. in Gegenwart von Sikkativen getrocknet. Im Vergleich zu strahlenhärtbaren Polyurethandispersionen ist die Aushärtung sehr langwierig. Zudem sind die mechanischen Eigenschaften und die chemischen Beständigkeiten denen der strahlenhärtbaren Polyurethandispersionen unterlegen.

EP-A 451590 und DE-A 4405208 offenbaren wässrige Polyurethandispersionen auf der Basis allyletherhaltiger Polyester. Solche Dispersionen können sowohl strahlengehärtet als auch oxidativ gehärtet werden. Allylether enthaltende Polyester sind im Vergleich zu ungesättigte Fettsäuren enthaltende Polyester deutlich hydrophiler und führen zu schlechteren chemischen Beständigkeiten in der Beschichtung. Die Kombination mit Polyepoxyacrylaten wird nicht beschrieben.

Die Kombination zweier Vernetzungsmechanismen, wie z. B. die Kombination von strahleninduzierter, radikalischer Polymerisation mit Urethanisierung durch Zusatz unblockierter oder blockierte Polyisocyanate, ist ebenfalls bekannt und wird als Dual-Cure bezeichnet. So offenbart WO-A 03106577 Beschichtungsmittel enthaltend wässrige, strahlenhärtbare Polyurethandispersionen und unblockierte, blockierte, hydrophilierte und/oder nicht hydrophilierte Polyisocyanate. Arbeitet man mit nicht blockierten Polyisocyanaten, so muss die Topfzeit des Lackes beachtet werden, d. h. dass der Lack binnen Minuten bis Stunden vergelt. Die Topfzeit beeinflusst wesentlich die Arbeitsweise und führt letztlich zu viel Abfall, da nicht benötigter Lack weder recycled noch gelagert werden kann. Arbeitet man mit blockierten Polyisocyanaten, so muss die Beschichtung nach Strahlenhärtung bei Temperaturen oberhalb von 100 °C eingebrannt werden, um eine Deblockierung des Isocyanats zu bewirken. Solche Temperaturen sind für temperaturempfindliche Substrate, wie z. B. Holz oder Kunststoff, nachteilig.

Es bestand somit die Aufgabe, strahlenhärtbare, wässrige Bindemittel zu entwickeln, die in farbigen Formulierungen bessere chemische und mechanische Beständigkeiten aufweisen als bisher bekannte. Insbesondere müssen sie nach physikalischer Trocknung blockfeste Filme ergeben, und die Überzüge müssen eine hohe Beständigkeit gegenüber färbende Agenzien und Lösungsmittel besitzen.

Überraschender Weise wurde gefunden, dass strahlenhärtbare, wässrige Dispersionen von Polyurethanacrylaten in farbigen Formulierungen gute chemische und mechanische Beständigkeiten erreichen, wenn sie sowohl auf aromatischen Polyepoxy(meth)acrylaten als auch auf ungesättigte Fettsäuren enthaltenden Oligo- und/oder Polyestern beruhen. Farbige Lacküberzüge, die auf solchen Bindemitteln basieren, erreichen durch Strahlungshärtung und oxidative Härtung eine deutlich höhere mechanische Festigkeit und bessere Chemikalienresistenzen als dies bisher für Lacke basierend auf bekannten Polyurethanacrylatdispersionen der Fall war. Dabei ist insbesondere die Beständigkeit gegen färbende Agenzien unerwartet gut. Bereits nach der sekundenschnellen Strahlenhärtung sind die lackierten Substrate ausreichend mechanisch und chemisch beanspruchbar, um weiterverarbeitet oder montiert zu werden. Die volle Belastbarkeit der Beschichtung wird je nach Ausführung der oxidativen Härtung binnen Stunden bis Tagen erreicht. Dies ist ein wesentlicher Vorteil gegenüber ausschließlich oxidativ härtbaren Systemen, da diese prinzipiell erst nach Stunden oder Tagen oxidativer Härtung weiter verarbeitet werden können. Die erfindungsgemäßen Bindemittel weisen keine Topfzeit auf, und eine Vernetzung bei erhöhter Temperatur ist nicht erforderlich, da die oxidative Vernetzung auch bei Raumtemperatur stattfindet.

Die Erfindung betrifft strahlenhärtbare, wässrige Dispersionen auf der Basis von Polyurethanacrylaten (i), die dadurch gekennzeichnet sind, dass das Polyurethanacrylat (i) als Aufbaukomponenten
A) eine oder mehrere aromatische Polyepoxy(meth)acrylate mit einer OH-Zahl von 20 bis 300 mg KOH/g Substanz,
B) gegebenenfalls von A) verschiedene Verbindungen mit mindestens einer gegenüber Isocyanat reaktiven Gruppe und mindestens einer strahlenhärtbaren Doppelbindung,
C) ein oder mehrere Oligo- oder Polyester enthaltend ungesättigte Fettsäuren mit einer OH-Zahl von 15 bis 300 mg KOH/g Substanz und einer Iodzahl von größer 50 g I₂/100 g Substanz,
D) gegebenenfalls eine oder mehrere Verbindungen, die mindestens eine gegenüber Isocyanat reaktiven Gruppe aber weder strahlenhärtbare noch oxidativ härtbare Doppelbindungen besitzen,
E) eine oder mehrere Verbindungen mit mindestens einer gegenüber Isocyanat reaktiven Gruppe und zusätzlich mindestens einer hydrophilierend wirkenden Gruppe,
F) ein oder mehrere organische Polyisocyanate und
G) gegebenenfalls von A) bis F) verschiedene Verbindungen mit mindestens einer Aminfunktion
   enthält.

Optional enthält die Dispersion eine Komponente (ii), wobei es sich um Reaktivverdünner, die mindestens eine radikalisch polymerisierbare Gruppe aufweisen, handelt.

"(Meth)acrylat" bezieht sich im Rahmen dieser Erfindung auf entsprechende Acrylat- oder Methacrylatfunktionen oder auf eine Mischung beider.

Die Bestimmung der OH-Zahl erfolgte gemäß DIN 53240, die der Iodzahl gemäß DIN 53241-1.

Aufbaukomponente A) und gegebenenfalls Komponenten B) und (ii) werden dabei in solchen Mengen eingesetzt, dass der Gehalt an strahlenhärtbaren Doppelbindungen zwischen 0,5 und 6,0, bevorzugt zwischen 1,0 und 5,5, besonders bevorzugt zwischen 1,5 und 5,0 mol/kg nicht wässriger Bestandteile der Dispersion beträgt.

Komponente A) wird zu 5 bis 45 Gew.-%, bevorzugt 10 bis 40 Gew.-%, besonders bevorzugt 15 bis 35 Gew.-% eingesetzt, wobei sich die Komponenten (i) und (ii) zu 100 Gew.-% addieren.

Komponente C) wird zu 15 bis 65 Gew.-%, bevorzugt 20 bis 55 Gew.-%, besonders bevorzugt 25 bis 50 Gew.-% eingesetzt, wobei sich die Komponenten (i) und (ii) zu 100 Gew.-% addieren.

Bevorzugt ist der Gehalt an Polyethylenglykoleinheiten kleiner als 20 Gew.-% bezogen auf die Summe aller nicht wässrigen Bestandteile der Dispersion.

Als Komponente A) geeignet sind die an sich bekannten hydroxylgruppenhaltigen Polyepoxy(meth)acrylate mit einer OH-Zahl im Bereich von 20 bis 300 mg KOH/g, bevorzugt von 100 bis 280 mg KOH/g, besonders bevorzugt von 150 bis 250 mg KOH/g. Solche Verbindungen werden auf Seite 37 bis 56 in P. K. T. Oldring (Ed.), Chemistry & Technology of UV & EB Formulations For Coatings, Inks & Paints, Vol. 2, 1991, SITA Technology, London beschrieben. Aromatische, hydroxylgruppenhaltige Polyepoxy(meth)acrylate basieren auf Umsetzungsprodukten von Acrylsäure und / oder Methacrylsäure mit aromatischen Glycidylethern (Epoxiden), bevorzugt aromatische Gylcidylether von monomerem, oligomerem oder polymerem Bisphenol-A und/oder Bisphenol-F oder deren alkoxylierten Derivaten.

Die unter Komponente A) aufgezählten Verbindungen können für sich alleine oder auch in Mischungen verwendet werden.

Komponente B) enthält eine oder mehrere Verbindungen ausgewählt aus der Gruppe bestehend aus Polyester(meth)acrylaten, Polyether(meth)acrylaten, Polyetherester(meth)acrylaten und ungesättigten Polyestern mit Allyletherstruktureinheiten mit einer OH-Zahl im Bereich von 15 bis 300 mg KOH/g Substanz und monohydroxyfunktionelle, (Meth)acrylatgruppen-haltige Alkohole.

Von den Polyester(meth)acrylaten werden als Komponente B) die hydroxylgruppenhaltigen Polyester(meth)acrylate mit einer OH-Zahl im Bereich von 15 bis 300 mg KOH/g Substanz, bevorzugt von 60 bis 200 mg KOH/g Substanz eingesetzt. Bei der Herstellung der hydroxyfunktionellen Polyester(meth)acrylate als Komponente B) können insgesamt 7 Gruppen von Monomerbestandteilen zur Anwendung kommen:
Die erste Gruppe (a) enthält Alkandiole oder Diole oder Gemische dieser. Die Alkandiole weisen ein Molekulargewicht im Bereich von 62 bis 286 g/mol auf. Bevorzugt sind die Alkandiole ausgewählt aus der Gruppe von Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol. Bevorzugte Diole sind Ethersauerstoff-enthaltende Diole, wie Diethylenglykol, Triethylenglykol, Tetraethylenglykol, Dipropylenglykol, Tripropylenglykol, Polyethylen-, Polypropylen- oder Polybutylenglykole mit einem Zahlenmittel der Molmasse Mn im Bereich von 200 bis 4000, bevorzugt 300 bis 2000, besonders bevorzugt 450 bis 1200 g/mol. Umsetzungsprodukte der zuvor genannten Diole mit ε-Caprolacton oder anderen Lactonen können ebenfalls als Diole zum Einsatz gelangen.

Die zweite Gruppe (b) enthält drei- und höherwertige Alkohole mit einem Molekulargewicht im Bereich von 92 bis 254 g/mol und / oder auf diesen Alkoholen gestartete Polyether. Besonders bevorzugte drei- und höherwertige Alkohole sind Glycerin, Trimethylolpropan, Pentaerythrit, Dipentaerythrit und Sorbit. Ein besonders bevorzugter Polyether ist das Umsetzungsprodukt von 1 mol Trimethylolpropan mit 4 mol Ethylenoxid.

Die dritte Gruppe (c) enthält Monoalkohole. Besonders bevorzugte Monoalkohole sind ausgewählt aus der Gruppe von Ethanol, 1- und 2-Propanol, 1- und 2-Butanol, 1- Hexanol, 2-Ethylhexanol, Cyclohexanol und Benzylalkohol.

Die vierte Gruppe (d) enthält Dicarbonsäuren mit einem Molekulargewicht im Bereich von 104 bis 600 g/mol und / oder deren Anhydride. Bevorzugte Dicarbonsäuren und deren Anhydride sind ausgewählt aus der Gruppe von Phthalsäure, Phthalsäureanhydrid, Isophthalsäure, Tetrahydrophthalsäure, Tetrahydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernstein-säure, Bernsteinsäureanhydrid, Glutarsäure, Adipinsäure, Pimelinsäure, Korksäure, Sebacinsäure, Dodecandisäure, hydrierte Dimere der Fettsäuren, wie sie unter der sechsten Gruppe (f) aufgelistet sind

Die fünfte Gruppe (e) enthält Trimellithsäure oder Trimellithsäureanhydrid.

Die sechste Gruppe (f) enthält Monocarbonsäuren, wie z. B. Benzoesäure, Cyclohexancarbonsäure, 2-Ethylhexansäure, Capronsäure, Caprylsäure, Caprinsäure, Laurinsäure, und natürliche und synthetische Fettsäuren, wie z. B. Laurin-, Myristin-, Palmitin-, Margarin-, Stearin-, Behen-, Cerotin-, Palmitolein, Öl-, Icosen-, Linol-, Linolen- und Arachidonsäure.

Die siebte Gruppe (g) enthält Acrylsäure, Methacrylsäure und / oder dimere Acrylsäure.

Geeignete hydroxylgruppenhaltige Polyester(meth)acrylate B) enthalten das Umsetzungsprodukt von mindestens einem Bestandteil aus Gruppe (a) oder (b) mit mindestens einem Bestandteil aus Gruppe (d) oder (e) und mindestens einem Bestandteil aus Gruppe (g).

Besonders bevorzugte Bestandteile aus der Gruppe (a) sind ausgewählt aus der Gruppe bestehend aus Ethandiol, 1,2- und 1,3-Propandiol, 1,4-Butandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, ausgewählt aus der Gruppe von Diethylenglykol, Triethylenglykol, Tetraethylenglykol, Dipropylenglykol, und Tripropylenglykol. Bevorzugte Bestandteile aus der Gruppe (b) sind ausgewählt aus der Gruppe von Glycerin, Trimethylolpropan, Pentaerythrit oder das Umsetzungsprodukt von 1 mol Trimethylolpropan mit 4 mol Ethylenoxid. Besonders bevorzugte Bestandteile aus den Gruppen (d) bzw. (e) sind ausgewählt aus der Gruppe von Phthalsäureanhydrid, Isophthalsäure, Tetrahydrophthalsäureanhydrid, Hexahydrophthalsäure, Hexahydrophthal-säureanhydrid, Maleinsäureanhydrid, Fumarsäure, Bernsteinsäureanhydrid, Glutarsäure, Adipinsäure, Dodecandisäure, hydrierte Dimere der Fettsäuren, wie sie unter der 6. Gruppe (f) aufgelistet sind und Trimellithsäureanhydrid. Bevorzugter Bestandteil aus der Gruppe (g) ist Acrylsäure.

Gegebenenfalls können in diese Polyester(meth)acrylate auch aus dem Stand der Technik allgemein bekannte, dispergierend wirkende Gruppen eingebaut werden. So können als Alkoholkomponente anteilig Polyethylenglykole und / oder Methoxypolyethylenglykole verwendet werden. Als Verbindungen können auf Alkoholen gestartete Polyethylenglykole, Polypropylenglykole und deren Blockcopolymere sowie die Monomethylether dieser Polyglykole verwendet werden. Besonders geeignet ist Polyethylenglykol-mono-methylether mit einem Zahlenmittel der Molmasse Mn im Bereich von 500 bis 1500 g/mol.

Weiterhin ist es möglich, nach der Veresterung einen Teil der noch freien, nicht veresterten Carboxylgruppen, insbesondere die der (Meth)acrylsäure, mit Mono-, Di- oder Polyepoxiden umzusetzen. Bevorzugt als Epoxide sind die Glycidylether von monomerem, oligomerem oder polymerem Bisphenol-A, Bisphenol-F, Hexandiol und / oder Butandiol oder deren ethoxylierte und / oder propoxylierte Derivate. Diese Reaktion kann insbesondere zur Erhöhung der OH-Zahl des Polyester(meth)acrylats verwendet werden, da bei der Epoxid-Säure-Reaktion jeweils eine OH-Gruppe entsteht. Die Säurezahl des resultierenden Produkts liegt zwischen 0 und 20 mg KOH/g, bevorzugt zwischen 0 und 10 mg KOH/g und besonders bevorzugt zwischen 0 und 5 mg KOH/g Substanz. Die Reaktion wird bevorzugt durch Katalysatoren wie Triphenylphosphin, Thiodiglykol, Ammonium- und / oder Phosphoniumhalogeniden und / oder Zirkon- oder Zinnverbindungen wie Zinn(II)ethylhexanoat katalysiert.

Die Herstellung von Polyester(meth)acrylaten wird auf der Seite 3, Zeile 25 bis Seite 6, Zeile 24 der DE-A 4 040 290, auf Seite 5, Zeile 14 bis Seite 11, Zeile 30 der DE-A 3 316 592 und Seite 123 bis 135 von P. K. T. Oldring (Ed.) in Chemistry & Technology of UV & EB Formulations For Coatings, Inks & Paints, Vol. 2, 1991, SITA Technology, London, beschrieben.

Ebenfalls geeignet als Komponente B) sind hydroxylgruppenhaltige Polyether(meth)acrylate, die aus der Umsetzung von Acrylsäure und / oder Methacrylsäure mit Polyethern hervorgehen, so z. B. Homo-, Co- oder Blockcopolymerisate von Ethylenoxid, Propylenoxid und / oder Tetrahydrofuran auf beliebigen hydroxy- und / oder aminfunktionellen Startermolekülen, wie z. B. Trimethylolpropan, Ethylenglykol, Propylenglykol, Diethylenglykol, Dipropylengykol, Glycerin, Pentaerythrit, Neopentylglykol, Butandiol und Hexandiol.

Ebenfalls geeignet als Komponente B) sind monohydroxyfunktionelle, (Meth)acrylatgruppen-haltige Alkohole, wie beispielsweise 2-Hydroxyethyl(meth)acrylat, Caprolacton-verlängerte Modifikationen von 2-Hydroxyethyl(meth)acrylat wie Pemcure® 12A (Cognis, DE), 2-Hydroxypropyl(meth)acrylat, 4-Hydroxybutyl(meth)acrylat, 3-Hydroxy-2,2-dimethylpropyl(meth)-acrylat, die im Mittel monohydroxyfunktionellen Di-, Tri- oder Penta(meth)acrylate mehrwertiger Alkohole wie Trimethylolpropan, Glycerin, Pentaerythrit, Ditrimethylolpropan, Dipentaerythrit, ethoxyliertes, propoxyliertes oder alkoxyliertes Trimethylolpropan, Glycerin, Pentaerythrit, Ditrimethylolpropan, Dipentaerythrit oder deren technische Gemische.

Außerdem können auch die Umsetzungsprodukte von (Meth)acrylsäuren mit gegebenenfalls doppelbindungshaltigen, monomeren Epoxidverbindungen als monohydroxyfunktionelle, (Meth)acrylatgruppen-haltige Alkohole eingesetzt werden. Bevorzugte Umsetzungsprodukte sind ausgewählt aus der Gruppe von (Meth)acrylsäure mit Glycidyl(meth)acrylat oder dem Glycidylester tertiärer, gesättigter Monocarbonsäure. Tertiäre, gesättigte Monocarbonsäuren sind beispielsweise 2,2-Dimethylbuttersäure, Ethylmethylbutter-, Ethylmethylpentan-, Ethylmethylhexan-, Ethylmethylheptan- und / oder Ethylmethyloktansäure.

Bevorzugte ungesättigte Gruppen enthaltende Verbindungen sind ausgewählt aus der Gruppe der Polyester(meth)acrylate, Polyether(meth)acrylate, 2-Hydroxyethyl(meth)acrylat, 2-Hydroxypropyl-(meth)acrylat, Pentaerythrittriacrylat, Dipentaerythritpentaacrylat und das Additionsprodukt aus Ethylmethylheptansäureglycidylester mit (Meth)acrylsäure und deren technische Gemische.

Die unter Komponente B) aufgezählten Verbindungen können für sich alleine oder auch in Mischungen verwendet werden.

Die Komponente C) umfasst hydroxyfunktionelle Oligo- oder Polyester enthaltend ungesättigte Fettsäuren mit einer OH-Zahl von 15 bis 300 mg KOH/g Substanz, bevorzugt 50 bis 180 mg KOH/g Substanz, besonders bevorzugt 70 bis 140 mg KOH/g Substanz, und einer Iodzahl von größer 50 g I₂/100 g Substanz.

Geeignet als Komponente C) sind Oligo- oder Polyester enthaltend als Aufbaukomponenten Di-, Tri-, Tetrole und/oder Hexole und ungesättigte Fettsäuren, gegebenenfalls weitere gesättigte, aliphatische und/oder aromatische Di- und Trisäuren.

Di-, Tri-, Tetrole und/oder Hexole als Aufbaukomponenten für Komponente C) sind beispielsweise Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxy-cyclohexyl)propan), von Dimerfettsäuren abgeleitete Diole, 2,2-Dimethyl-3-hydroxypropionsäure-(2,2-dimethyl-3-hydroxypropylester), Glycerin, Trimethylolethan, Trimethylolpropan, Trimethylolbutan, Ditrimetylolpropan, Rizinusöl, partiell dehydratisiertes Rizinusöl, Pentaerythrit und / oder Dipentaerythrit. Ungesättigte Fettsäuren als Aufbaukomponenten für Komponente C) sind beispielsweise Leinölfettsäure, Sojabohnenölfettsäure, Sonnenblumenölfettsäure, Rübölfettsäure und Heringsölfettsäure, destillierte Produkte, die überwiegend (>60 Gew.-%) Ölsäure, Linolsäure, Licansäure, Arachidonsäure, Palmitoleinsäure, Rizinolsäure und Linolensäure enthalten, bevorzugt sind ungesättigte Fettsäuren, die in ihrer Zusammensetzung bzgl. des Fettsäurerestes den natürlich vorkommenden Fettsäuregemischen entsprechen, wie sie aus pflanzlichen oder tierischen Ölen, z. B. Sojabohnenöl, Tallöl, Leinöl oder Sonnenblumenöl gewonnen werden können. Gegebenenfalls können auch gesättigte, aliphatische und/oder aromatische Di- und Trisäuren als Aufbaukomponenten enthalten sein, wie beispielsweise Phthalsäure, Isophthalsäure, Terephthalsäure, Trimellithsäure, Adipinsäure, Hexahydrophthalsäure, Malonsäure, Bernsteinsäure, Glutarsäure, Pimelinsäure, Korksäure, Sebacinsäure, Dodecandisäure, hydrierte Dimerfettsäuren, Trimellithsäure und deren analoge Anhydride.

Ebenfalls als Komponente C) geeignet ist partiell dehydratisiertes Rizinusöl, das durch thermische Belastung von Rizinusöl unter saurer Katalyse erhalten wird und in EP-A 709 414 (S. 2, Z. 37-40) beschrieben ist.

Ebenfalls geeignet als Komponente C) sind Ver- und Umesterungsprodukte von ungesättigten Fettsäuren und/oder ungesättigten Ölen mit mindestens bifunktionellen Polyolverbindungen, bevorzugt tri- und tetrafunktionelle Hydroxylkomponenten, wie beispielsweise Trimethylolethan, Trimethylolpropan, Glycerin, Rizinusöl und Pentaerythrit. Solche Umesterungsprodukte sind in EP-A 017 199 (S. 10, Z. 27 bis S. 11 Z. 31) beschrieben.

In EP-A 640 632 (S. 2 Z. 50 - 58 und S. 3 Z. 10 - 14) werden weitere geeignete, ungesättigte Fettsäuren enthaltende Produkte beschrieben. Sie werden durch Veresterung von ungesättigten Fettsäuren und/oder ungesättigten Ölen mit Polyolen erhalten. Als Beispiele für solche Fettsäuren seien genannt Linolsäure, Licansäure, Arachidonsäure, Palmitoleinsäure und/oder Linolensäure, bevorzugt solche, bei denen es sich um Fettsäuregemische aus pflanzlichen oder tierischen Ölen z. B. Sojabohnenöl, Tallöl, Leinöl oder Sonnenblumenöl handelt, die mit Polyolen wie z. B. Trimethylolethan, Trimethylolpropan, Glycerin oder Pentaerythrit umgeestert werden. Besonders bevorzugt sind Umesterungsprodukte aus ungesättigten Ölen wie beispielsweise dehydriertem Rizinusöl, Sonnenblumenöl, Sojabohnenöl, Leinöl, Tallöl, Olivenöl oder Gemische aus diesen mit Trimethylolethan, Trimethylolpropan, Glycerin oder Pentaerythrit.

Bevorzugte Komponenten C) sind Umsetzungsprodukte aus ungesättigten Fettsäuren, wie z. B. Ölsäure, Laurinsäure, Linolsäure oder Linolensäure, mit Rizinusöl in Gegenwart von Glycerin und/oder Umsetzungsprodukte aus ungesättigten Ölen mit Rizinusöl. Bevorzugt als ungesättigte Fettsäuren sind solche, bei denen es sich um ungesättigte Fettsäuregemische handelt, die aus pflanzlichen oder tierischen Ölen wie z. B. Sojabohnenöl, Tallöl, Leinöl, Sonnenblumenöl oder Olivenöl gewonnen werden können handelt.

Besonders bevorzugt ist Komponente C) das Umesterungsprodukt aus Rizinusöl und einem oder mehreren Ölen mit einer Jodzahl größer 100.

Ganz besonders bevorzugt als Komponente C) ist das Umesterungsprodukt aus Rizinusöl und Sojabohnenöl.

Ebenfalls geeignet sind Gemische der aufgeführten Komponenten C).

Die Komponente D) enthält monomere Mono-, Di- und/oder Triole jeweils mit einem Molekulargewicht von 32 bis 240 g/mol, wie z. B. Methanol, Ethanol, 1-Propanol, 1-Butanol, 1-Pentanol, 1-Hexanol, 2-Propanol, 2-Butanol, 2-Ethylhexanol, Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), von Dimerfettsäuren abgeleitete Diole, 2,2-Dimethyl-3-hydroxypropionsäure-(2,2-dimethyl-3-hydroxypropylester), Glycerin, Trimethylolethan, Trimethylolpropan, Trimethylolbutan und/oder Rizinusöl. Bevorzugt sind Neopentylglykol, 1,4-Butandiol, 1,4-Cyclohexandimethanol, 1,6-Hexandiol und/oder Trimethylolpropan.

Des Weiteren enthält Komponente D) oligomere und/oder polymere, hydroxyfunktionelle Verbindungen. Diese oligomeren und/oder polymeren, hydroxyfunktionellen Verbindungen sind beispielsweise Polyester, Polycarbonate, Polyethercarbonatpolyole, C2-, C3-, und/oder C4-Polyether, Polyetherester und/oder Polycarbonatpolyester mit einer Funktionalität von 1,0 bis 3,0, jeweils mit einem Gewichtsmittel der Molmasse Mw im Bereich von 300 bis 4000, bevorzugt 500 bis 2500 g/mol.

Hydroxyfunktionelle Polyesteralkohole sind solche auf der Basis von Mono-, Di- und Tricarbonsäuren mit monomeren Di- und Triolen, wie sie bereits als Komponente D) aufgezählt wurden, sowie Polyesteralkohole auf Lacton-Basis. Bei den Carbonsäuren handelt es sich zum Beispiel um Phthalsäure, Isophthalsäure, Terephthalsäure, Trimellithsäure, Adipinsäure, Hexahydrophthalsäure, Malonsäure, Bernsteinsäure, Glutarsäure, Pimelinsäure, Korksäure, Sebacinsäure, Dodecandisäure, hydrierte Dimere der Fettsäuren sowie gesättigte Fettsäuren, wie z. B. Palmitinsäure und Stearinsäure. Von den Di- und Tricarbonsäuren können auch die analogen Anhydride verwendet werden.

Hydroxyfunktionelle Polyetherole sind beispielsweise durch Polymerisation von cyclischen Ethern oder durch Umsetzung von Alkylenoxiden mit einem Startermolekül erhältlich.

Hydroxyfunktionelle Polycarbonate sind hydroxyl-terminierte Polycarbonate, die durch Umsetzung von Diolen, Lacton-modifizierten Diolen oder Bisphenolen, z. B. Bisphenol A, mit Phosgen oder Kohlensäurediestern, wie Diphenylcarbonat oder Dimethylcarbonat, zugängliche Polycarbonate. Hydroxyfunktionelle Polyethercarbonatpolyole sind solche, wie sie zum Aufbau von Polyurethandispersionen in DE 102008000478 A beschrieben werden.

Die unter Komponente D) aufgezählten Verbindungen können für sich alleine oder auch in Mischungen verwendet werden.

Die Komponente E) umfasst Verbindungen mit mindestens einer gegenüber Isocyanat reaktiven Gruppe und zusätzlich mindestens einer hydrophilierend wirkenden Gruppe.

Zu den hydrophilierend wirkenden Gruppen gehören ionische Gruppen E1) und/oder die aus potentiell ionischen Gruppen E2) hervorgehenden (beispielsweise durch Salzbildung) ionischen Gruppen E1), die anionischer Natur E1.1) wie beispielsweise Sulfonium-, Phosphonium-, Carboxylat-, Sulfonat-, Phosphonat-Gruppen oder kationischer Natur E1.2) wie beispielsweise Ammonium-Gruppen sein können, potentiell ionische Gruppen E2), d.h. Gruppen, die beispielsweise durch Salzbildung in ionische Gruppen E1) überführt werden können und/oder nicht-ionische Gruppen E3) wie beispielsweise Polyethergruppen, die durch isocyanatreaktive Gruppen in die Makromoleküle eingebaut werden können. Bevorzugt geeignete isocyanatreaktive Gruppen sind Hydroxyl- und Aminogruppen.

Verbindungen enthaltend potentiell ionische Gruppen E2) umfassen Verbindungen mit potentiell anionischen Gruppen E2.1) wie beispielsweise Mono- und Dihydroxycarbonsäuren, Mono- und Diaminocarbonsäuren, Mono- und Dihydroxysulfonsäuren, Mono- und Diaminosulfonsäuren, Mono- und Dihydroxyphosphonsäuren, Mono- und Diaminophosphonsäuren und/oder Verbindungen mit potentiell kationischen Gruppen E2.2) wie beispielsweise Ethanolamin, Diethanolamin, Triethanolamin, 2-Propanolamin, Dipropanolamin, Tripropanolamin, N-Methylethanolamin, N-Methyl-diethanolamin und N,N-Dimethylethanolamin.

Bevorzugte Verbindungen enthaltend potentiell anionischen Gruppen E2.1) sind ausgewählt aus der Gruppe bestehend aus Dimethylolpropionsäure, Dimethylolbuttersäure, Hydroxypivalinsäure, N-(2-Aminoethyl)-alanin, 2-(2-Amino-ethylamino)-ethansulfonsäure, Ethylendiamin-propyl- oder - butylsulfonsäure, 1,2- oder 1,3-Propylendiamin-ethylsulfonsäure, 3-(Cyclohexylamino)propan-1-sulfonsäure, Äpfelsäure, Zitronensäure, Glykolsäure, Milchsäure, Glycin, Alanin, Taurin, Lysin, 3,5-Diaminobenzoesäure, ein Additionsprodukt von Isophorondiamin (1-Amino-3,3,5-trimethyl-5-aminomethylcyclohexan, IPDA) und Acrylsäure (EP-A 916 647, Beispiel 1), das Addukt von Natriumbisulfit an Buten-2-diol-1,4- Polyethersulfonat sowie das propoxylierte Addukt aus 2-Butendiol und NaHSO₃, wie in DE-A 2 446 440 auf Seite 5-9, Formel I-III beschrieben.

Besonders bevorzugte Verbindungen enthaltend potentiell ionische Gruppen E2) sind Carboxyl-, Sulfonsäuregruppen und/oder tertiäre Aminogruppen enthaltende Verbindungen wie beispielsweise 2-(2-Amino-ethylamino-)ethansulfons ä u r e , 3-(Cyclohexylamino)propan-1-sulfonsäure, das Additionsprodukt von Isophorondiamin und Acrylsäure (EP 916 647 A1, Beispiel 1), Hydroxypivalinsäure, Dimethylolpropionsäure, Triethanolamin, Tripropanolamin, N-Methyldiethanolamin und/oder N,N-Dimethylethanolamin.

Ganz besonders bevorzugt enthält Komponente E) als Verbindungen mit potentiell ionischen Gruppen Hydroxypivalinsäure und/oder Dimethylolpropionsäure.

Geeignete nicht-ionisch hydrophilierend wirkende Gruppen E3) sind beispielsweise Polyalkylenoxidether, die mindestens eine Hydroxy- oder Aminogruppe, sowie eine oder mehrere Alkylenoxideinheiten, von denen wenigstens eine Ethylenoxideinheit ist, enthalten. Diese Polyalkylenoxidether sind in an sich bekannter Weise durch Alkoxylierung geeigneter Startermoleküle zugänglich.

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Ebenfalls geeignet ist Trimethylolpropan, das nur an einer OH-Gruppe alkoxyliert wird. Bevorzugte Startermoleküle sind gesättigte Monoalkohole und Trimethylolpropan, das nur an einer OH-Gruppe alkoxyliert wird. Besonders bevorzugt wird Diethylenglykolmonobutylether als Startermolekül verwendet.

Für die Alkoxylierungsreaktion geeignete Alkylenoxide sind beispielsweise Ethylenoxid, 1-Butenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% Ethylenoxideinheiten umfassen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen. Ebenfalls bevorzugt sind Trimethylolpropan-gestartete Polyalkylenoxide mit einer OH-Funktionalität von 2, wie z. B. Tegomer^{®} D 3403 (Evonik Industries AG, Essen, DE) und Ymer^{®} N 120 (Perstorp AB, Schweden).

Die unter Komponente E2.1) genannten Säuren werden durch Umsetzung mit Neutralisationsmitteln, wie Triethylamin, Ethyldiisopropylamin, Dimethylcyclohexylamin, Dimethylethanolamin, Ammoniak, N-Ethylmorpholin, LiOH, NaOH und/oder KOH in die entsprechenden Salze überführt. Der Neutralisationsgrad liegt dabei bevorzugt zwischen 50 und 125%. Der Neutralisationsgrad ist wie folgt definiert: Bei säurefunktionalisierten Polymeren als Quotient aus Base und Säure; bei basefunktionalisierten Polymeren als Quotient aus Säure und Base. Liegt der Neutralisation über 100 %, so wird bei säurefunktionalisierten Polymeren mehr Base zugegeben als Säuregruppen im Polymer vorhanden sind; bei basefunktionalisierten Polymeren wird mehr Säure zugegeben als Basegruppen im Polymer vorhanden sind.

Die unter Komponente E2.2) genannten Basen werden durch Umsetzung mit Neutralisationsmitteln, wie z. B. anorganische Säuren, wie beispielsweise Salzsäure, Phosphorsäure und/oder Schwefelsäure, und/oder organischen Säuren, wie beispielsweise Ameisensäure, Essigsäure, Milchsäure, Methan-, Ethan- und/oder p-Toluolsulfonsäure, in die entsprechenden Salze überführt. Der Neutralisationsgrad liegt dabei bevorzugt zwischen 50 und 125 %.

Die unter Komponente E) aufgeführten Verbindungen können auch in Mischungen verwendet werden.

Die ionische Hydrophilierung und die Kombination von ionischer und nicht-ionischer Hydrophilierung sind gegenüber der rein nicht-ionischen Hydrophilierung bevorzugt.

Die Komponente F) sind Polyisocyanate ausgewählt aus der Gruppe von aromatischen, araliphatischen, aliphatischen oder cycloaliphatischen Polyisocyanaten oder Mischungen solcher Polyisocyanate. Geeignete Polyisocyanate sind beispielsweise 1,3-Cyclohexandiisocyanat, 1-Methyl-2,4-diisocyanato-cyclohexan, 1-Methyl-2,6-diisocyanato-cyclohexan, Tetramethylen-diiso-cyanat, 4,4'-Diisocyanatodiphenylmethan, 2,4'-Diisocyanatodiphenylmethan, 2,4-Diiso-cyanatotoluol, 2,6-Diisocyanatotoluol, α,α,α',α,'-Tetra-methyl-m- oder p-Xylylendiisocyanat, 1,6-Hexamethylendiisocyanat, 1-Isocyanato-3,3,5-trimethyl-5-isocyanatomethylcyclohexan (Isophorondiisocyanat oder IPDI), 4,4'-Diisocyanato-dicyclohexylmethan, 1,3-Bis(isocyanatomethyl)benzol (XDI), 1,3-Bis(1-isocyanato-1-methylethyl)-benzol (TMXDI), 4-Isocyanatomethyl1,8-octan-diisocyanat (Triisocyanatononan, TIN) (EP-A 928 799), Homologe bzw. Oligomere dieser aufgezählten Polyisocyanate mit Biuret-, Carbodiimid-, Isocyanurat-, Allophanat-, Iminooxadiazindion- und / oder Uretdiongruppen, und deren Mischungen.

Ebenfalls geeignet als Komponente F) sind Verbindungen mit mindestens zwei freien Isocyanatgruppen, mindestens einer Allophanatgruppe und mindestens einer über die Allophanatgruppe gebundenen, radikalisch polymerisierbaren C=C-Doppelbindung, wie sie als Komponente a) in WO 2006089935 A1 beschrieben werden.

Bevorzugt sind 1,6-Hexamethylendiisocyanat, 1-Isocyanato-3,3,5-trimethyl-5-isocyanatomethylcyclohexan (Isophorondiisocyanat oder IPDI) und 4,4'-Diisocyanato-dicyclohexylmethan, Homologe bzw. Oligomere von 1-Isocyanato-3,3,5-trimethyl-5-isocyanatomethylcyclohexan (Isophorondiisocyanat oder IPDI) und 4,4'-Diisocyanato-dicyclohexylmethan mit Biuret-, Carbodiimid-, Isocyanurat-, Allophanat-, Iminooxadiazindion- und/oder Uretdiongruppen und deren Mischungen.

Die unter Komponente F) aufgezählten Verbindungen können für sich alleine oder auch in Mischungen verwendet werden.

Zur Erhöhung des Gewichtsmittel des Molekulargewichts M_{w} der Polyurethanacrylate werden Mono- und Diamine und / oder mono- oder difunktionelle Aminoalkohole als Komponente G) verwendet. Bevorzugte Diamine sind solche, die gegenüber den Isocyanatgruppen reaktiver sind als Wasser, da die Verlängerung des Polyesterurethan(meth)acrylats gegebenenfalls im wässrigen Medium stattfindet. Besonders bevorzugt sind die Diamine ausgewählt aus der Gruppe von Ethylendiamin, 1,6-Hexamethylendiamin, Isophorondiamin, 1,3-Phenylendiamin, 1,4-Phenylendiamin, Piperazin, 4,4'-Diphenylmethandiamin, aminofunktionelle Polyethylenoxide, aminofunktionelle Polypropylenoxide (bekannt unter dem Namen Jeffamin^{®} D-Reihe (Huntsman Corp. Europe, Zavantem, Belgien) und Hydrazin. Ganz besonders bevorzugt ist Ethylendiamin.

Bevorzugte Monoamine sind ausgewählt aus der Gruppe von Butylamin, Ethylamin und Amine der Jeffamin^{®} M-Reihe (Huntsman Corp. Europe, Zavantem, Belgien), aminofunktionelle Polyethylenoxide, aminofunktionelle Polypropylenoxide und / oder Aminoalkohole.

Bevorzugt sind die erfindungsgemäßen wässrigen Dispersionen auf der Basis von Polyurethanacrylaten (i) frei von ungesättigten, mit Dicyclopentadien modifizierten Polyesterharz.

Die Komponente (ii) sind Reaktivverdünner, unter denen Verbindungen zu verstehen sind, die mindestens eine radikalisch polymerisierbare Gruppe, bevorzugt Acrylat- und Methacrylatgruppen, und bevorzugt keine gegenüber Isocyanat- oder Hydroxygruppen reaktiven Gruppen enthalten.

Bevorzugte Verbindungen (ii) weisen 2 bis 6, besonders bevorzugt 4 bis 6 (Meth)acrylatgruppen auf.

Besonders bevorzugte Verbindungen (ii) weisen einen Siedepunkt von mehr als 200 °C bei Normaldruck auf.

Reaktivverdünner sind allgemein in P. K. T. Oldring (Herausgeber), Chemistry & Technology of UV & EB Formulations for Coatings, Inks & Paints, Vo. II, Chapter III: Reactive Diluents for UV & EB Curable Formulations, Wiley and SITA Technology, London 1997 beschrieben.

Reaktivverdünner sind beispielsweise die mit (Meth)acrylsäure vollständig veresterten Alkohole Methanol, Ethanol, 1-Propanol, 1-Butanol, 1-Pentanol, 1-Hexanol, 2-Propanol, 2-Butanol, 2-Ethylhexanol, Dihydrodicyclopentadienol, Tetrahydrofurfurylalkohol, 3,3,5-Trimethylhexanol, Octanol, Decanol, Dodecanol, Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), Tricyclodecandimethanol, Glycerin, Trimethylolethan, Trimethylolpropan Trimethylolbutan, Pentaerythrit, Ditrimethylolpropan, Dipentaerythrit, Sorbitol sowie ethoxylierte und/oder propoxylierte Derivate der aufgeführten Alkohole und die bei der (Meth)acrylierung der vorgenannten Verbindungen anfallenden technischen Gemische.

Die Komponente (ii) ist bevorzugt ausgewählt aus der Gruppe von (Meth)acrylaten von Tetrolen und Hexolen, wie z. B. (Meth)acrylate von Pentaerythrit, Ditrimethylolpropan, Dipentaerythrit, Sorbitol, ethoxyliertes, propoxyliertes oder alkoxyliertes Pentaerythrit, Ditrimethylolpropan, Dipentaerythrit, Sorbitol sowie ethoxylierte und/oder propoxylierte Derivate der aufgeführten Alkohole und die bei der (Meth)acrylierung der vorgenannten Verbindungen anfallenden technischen Gemische.

Zur Herstellung der erfindungsgemäßen Dispersionen können sämtliche, aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der Organischen Chemie, Houben-Weyl, 4. Auflage, Band E20 / Teil 2 auf Seite 1682, Georg Thieme Verlag, Stuttgart, 1987. Bevorzugt sind das Schmelz-Emulgier- und das Aceton-Verfahren. Besonders bevorzugt wird das Aceton-Verfahren.

Gegenstand der Erfindung ist auch ein Verfahren zur Herstellung strahlenhärtbarer, wässriger Dispersionen auf der Basis von Polyurethanacrylaten (i), dadurch gekennzeichnet, dass durch Umsetzen der Komponenten A) bis E) in einem oder mehreren Reaktionsschritten mit Komponente F) ein Polyurethanacrylat (i) erhalten wird, wobei ein Neutralisationsmittel zur Erzeugung der für die Dispergierung notwendigen ionischen Gruppen vor, während oder nach der Herstellung des Additionsproduktes von A) bis F) zugegeben werden kann, gefolgt von einem Dispergierschritt durch Zugabe von Wasser zum Additionsprodukt von A) bis F) oder Überführen des Additionsproduktes von A) bis F) in eine wässrige Vorlage, wobei vor, während oder nach der Dispergierung eine Kettenverlängerung mittels Komponente G) erfolgen kann.

Gegenstand der Erfindung ist auch ein Verfahren gemäß vorstehender Beschreibung, bei dem ein oder mehrere Reaktivverdünner (Komponente (ii)), enthaltend mindestens eine radikalisch polymerisierbare Gruppe beigemischt werden.

Zur Herstellung strahlenhärtbarer, wässriger Dispersionen auf der Basis von Polyurethanacrylaten (i) werden die Komponenten A) bis E) im Reaktor vorgelegt und gegebenenfalls mit Aceton verdünnt. Gegebenenfalls kann auch Komponente (ii) zu den Komponenten A) bis E) zugesetzt werden. Des Weiteren ist es möglich, die der Technik bekannten Katalysatoren zur Urethanisierung zuzusetzen, wie z. B. Dibutylzinndialaurat, Zinn(II)oktoat und Bismuth(III)oktoat. In der Regel wird die Mischung auf 30 bis 60 °C erhitzt, um ein Anspringen der Reaktion zu bewirken. Anschließend dosiert man das oder die Polyisocyanate F) zu. Auch die umgekehrte Variante ist möglich, wobei dann die Polyisocyanate F) vorgelegt und die isocyanatreaktiven Komponenten A) bis E) zugegeben werden. Die Zugabe der Komponenten A) bis E) kann auch nacheinander und in beliebiger Reihenfolge erfolgen. Ebenfalls ist eine stufenweise Umsetzung der Komponenten möglich, das heißt die separate Umsetzung von Komponente F) mit einer oder mehreren isocyanatreaktiven Komponenten A) bis E) bevor das gewonnene Addukt mit den noch nicht verwendeten Komponenten weiter umgesetzt wird.

Zur Kontrolle der Reaktion wird der Isocyanatgehalt in regelmäßigen Abständen über Titration, Infrarot- oder Nahinfrarot-Spektroskopie bestimmt.

Die molaren Verhältnisse von Isocyanatgruppen in F) zu gegenüber Isocyanat reaktiven Gruppen in A) bis E) betragen von 0,8 : 1 bis 2,5 : 1, bevorzugt 1,2 : 1 bis 1,5 : 1.

Nach der Herstellung des Polyurethanacrylats (i) nach dem erfindungsgemäßen Verfahren aus den Komponenten A) bis F) erfolgt, falls dies noch nicht in den Ausgangsmolekülen durchgeführt wurde, die Salzbildung der dispergierend wirkenden Gruppen der Komponente E). Im Fall, dass Komponente E) saure Gruppen enthält, werden bevorzugt Basen ausgewählt aus der Gruppe von Triethylamin, Ethyldiisopropylamin, Dimethylcyclohexylamin, Dimethylethanolamin, Ammoniak, N-Ethylmorpholin, LiOH, NaOH und / oder KOH eingesetzt. Im Fall, dass Komponente E) basische Gruppen enthält, werden bevorzugt Säuren ausgewählt aus der Gruppe von Milchsäure, Essigsäure, Phosphorsäure, Chlorwasserstoffsäure und / oder Schwefelsäure eingesetzt. Werden als Komponente E) nur Ethergruppen enthaltende Verbindungen eingesetzt, entfällt dieser Neutralisationsschritt.

Im Anschluss kann optional ein Reaktivverdünner (ii) oder einer Mischung von Reaktivverdünnern (ii) zugegeben werden. Das Zumischen von Komponente (ii) erfolgt bevorzugt bei 30 bis 45 °C. Sobald diese sich gelöst hat, folgt gegebenenfalls der letzte Reaktionsschritt, bei dem im wässrigen Medium eine Molekulargewichtserhöhung und die Ausbildung der für das erfindungsgemäße Beschichtungssystem benötigten Dispersionen stattfinden: Das Polyurethanacrylat (i), synthetisiert aus den Komponenten A) bis F) und gegebenenfalls der oder die Reaktivverdünner (ii), gegebenenfalls gelöst in Aceton, wird unter starkem Rühren entweder in das Dispergierwasser, das das oder die Amine G) enthält, eingetragen oder man rührt umgekehrt die Dispergierwasser-Amin-Mischung zu der Polyurethanacrylatlösung. Außerdem bilden sich die Dispersionen aus, die im erfindungsgemäßen Beschichtungssystem enthalten sind. Die eingesetzte Menge an Amin G) hängt von den noch vorhandenen, nicht umgesetzten Isocyanatgruppen ab. Die Umsetzung der noch freien Isocyanatgruppen mit dem Amin G) kann zu 35 % bis 150 % erfolgen. In dem Fall, dass ein Unterschuss an Amin G) eingesetzt wird, reagieren noch freie Isocyanatgruppen langsam mit Wasser ab. Wird ein Überschuss an Amin G) verwendet, so liegen keine unreagierten Isocyanatgruppen mehr vor, und es wird ein aminfunktionelles Polyurethan erhalten. Bevorzugt werden 80% bis 110%, besonders bevorzugt 90 % bis 100 % der noch freien Isocyanatgruppen mit dem Amin G) umgesetzt.

In einer weiteren Variante ist es möglich, die Molekulargewichtserhöhung durch das Amin G) bereits in acetonischer Lösung, d. h. vor der Dispergierung, und gegebenenfalls vor oder nach der Zugabe des oder der Reaktivverdünner (ii) durchzuführen.

In einer weiteren Variante ist es möglich, die Molekulargewichtserhöhung durch das Amin G) nach dem Dispergierschritt durchzuführen.

Falls erwünscht, kann das organische Lösungsmittel - sofern vorhanden - abdestilliert werden. Die Dispersionen haben dann einen Festkörpergehalt von 20 bis 60 Gew.-%, insbesondere 30 bis 58 Gew.-%.

Es ist ebenfalls möglich, den Dispergierschritt parallel, das heißt gleichzeitig oder zumindest teilweise gleichzeitig durchzuführen.

Gegenstand der Erfindung ist auch die Verwendung der erfindungsgemäßen strahlenhärtbaren, wässrigen Dispersionen zur Herstellung von Beschichtungen insbesondere von Lacken und Klebstoffen.

Die erfindungsgemäßen Dispersionen ergeben nach Entfernen des Wassers mit üblichen Methoden, wie Wärme, Wärmestrahlung, bewegter ggf. getrockneter Luft und / oder Mikrowellen, klare Filme. Im Anschluss erfolgen die Strahlenhärtung und die oxidative Härtung. Dabei ist die Reihenfolge der beiden Härtungsarten beliebig. Bevorzugt ist es, die Strahlenhärtung zuerst und im Anschluss die oxidative Härtung durchzuführen.

Zur strahlenchemisch induzierten Polymerisation ist elektromagnetische Strahlung geeignet, deren Energie, gegebenenfalls unter Zusatz von geeigneten Photoinitiatoren, ausreicht, um eine radikalische Polymerisation von (Meth)acrylat-Doppelbindungen zu bewirken.

Bevorzugt erfolgt die strahlenchemisch induzierte Polymerisation mittels Strahlung mit einer Wellenlänge von kleiner 400 nm, wie UV-, Elektronen-, Röntgen- oder Gamma-Strahlen. Besonders bevorzugt ist die UV-Strahlung, wobei die Härtung mit UV-Strahlung in Gegenwart von Fotoinitiatoren ausgelöst wird. Bei den Fotoinitiatoren wird prinzipiell zwischen zwei Typen unterschieden, dem unimolekularen (Typ I) und dem bimolekularen (Typ II). Geeignete (Typ I)-Systeme sind aromatische Ketonverbindungen, wie z. B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide, 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Bevorzugt sind Fotoinitiatoren, die leicht in wässrige Beschichtungsmittel einzuarbeiten sind. Solche Produkte sind beispielsweise Irgacure^{®} 500 (eine Mischung von Benzophenon und (1-Hydroxycyclohexyl)phenylketon, Fa. Ciba, Lampertheim, DE), Irgacure^{®} 819 DW (Phenylbis-(2,4,6-trimethylbenzoyl)-phosphinoxid, Fa. Ciba, Lampertheim, DE), Esacure^{®} KIP EM (Oligo-[2-hydroxy-2-methyl-1-[4-(1-methylvinyl)-phenyl]-propanone], Fa. Lamberti, Aldizzate, Italien). Es können auch Gemische dieser Verbindungen eingesetzt werden.

Zur Einarbeitung der Photoinitiatoren können auch polare Lösemittel, wie z. B. Aceton und Isopropanol, verwendet werden.

Vorteilhaft wird die Strahlenhärtung bei 30 bis 70 °C durchgeführt, weil bei höherer Temperatur der Umsetzungsgrad an (Meth)acrylatgruppen tendenziell erhöht ist. Dies kann bessere Beständigkeitseigenschaften zur Folge haben. Allerdings ist bei der UV-Härtung eine mögliche Temperaturempfindlichkeit des Substrats zu berücksichtigen, so dass optimale Härtungsbedingungen für eine bestimmte Beschichtungsmittel-Substrat-Kombination vom Fachmann in einfachen Vorversuchen zu ermitteln sind.

Der oder die Strahler, die die radikalische Polymerisation auslösen, können dabei ortsfest sein und das beschichtete Substrat wird durch geeignete übliche Vorrichtungen am Strahler vorbeibewegt oder die Strahler sind durch übliche Vorrichtungen beweglich, so dass die beschichteten Substrate während der Härtung ortsfest sind. Es ist auch möglich die Bestrahlung z. B. in Kammern durchzuführen, bei denen das beschichtete Substrat in die Kammer eingebracht wird, anschließend die Strahlung für einen bestimmten Zeitraum eingeschaltet wird, und nach der Bestrahlung das Substrat wieder aus der Kammer entfernt wird.

Gegebenenfalls wird unter Inertgasatmosphäre, d. h. unter Sauerstoffausschluss, gehärtet, um eine Inhibierung der radikalischen Vernetzung durch Sauerstoff zu verhindern.

Statt der Strahlenhärtung kann auch eine thermisch-radikalische Härtung erfolgen. Dafür eignen sich wasserlösliche Peroxide oder wässrige Emulsionen nicht-wasserlöslicher Initiatoren. Diese Radikalbildner können in bekannter Weise mit Beschleunigern kombiniert werden.

Die oxidative Härtung findet unter Sauerstoff statt. Dabei reicht in der Regel Luftsauerstoff.

Zur oxidativen Härtung ist es möglich, die Substrate bei 30 °C bis 200 °C über mehrere Stunden zu erhitzen, um die oxidative Vernetzung zu beschleunigen. Die oxidative Vernetzung findet aber auch bei Raumtemperatur statt.

Zur Beschleunigung der oxidativen Vernetzung können Sikkative zugesetzt werden, wie z. B. Blei-, Kobalt-, Eisen-, Mangan- und Kupfersalze.

Die erfindungsgemäßen wässrigen, strahlenhärtbaren Polyurethandispersionen lassen sich durch die üblichen Techniken auf unterschiedlichste Substrate applizieren, bevorzugt Spritzen, Walzen, Fluten, Drucken, Rakeln, Gießen, Streichen und Tauchen.

Mit den erfindungsgemäßen wässrigen, strahlenhärtbaren Polyurethandispersionen können grundsätzlich alle Substrate lackiert bzw. beschichtet werden. Bevorzugte Substrate sind ausgewählt aus der Gruppe bestehend aus mineralischen Untergründen, Holz, Holzwerkstoffen, Möbeln, Parkett, Türen, Fensterrahmen, metallischen Gegenständen, Kunststoffen, Papier, Pappe, Kork, mineralischen Substraten, Textilien oder Leder. Sie eignen sich hierbei als Grundierung und / oder als Decklack. Zusätzlich können die erfindungsgemäßen wässrigen, strahlenhärtbaren Polyurethandispersionen auch in oder als Klebstoffe eingesetzt werden, z. B. in Kontaktklebstoffen, in thermoaktivierbaren Klebstoffen oder in Kaschierklebstoffen.

Die erfindungsgemäßen wässrigen, strahlenhärtbaren Polyurethandispersionen können alleine aber auch in Bindemittelmischungen mit anderen Dispersionen eingesetzt werden. Dies können Dispersionen sein, die ebenfalls ungesättigte Gruppen enthalten, wie z. B. ungesättigte, polymerisierbare Gruppen enthaltende Dispersionen auf Polyester-, Polyurethan-, Polyepoxy(meth)acrylat-, Polyether-, Polyamid-, Polysiloxan-, Polycarbonat-, Polyesteracrylat-, Polyurethan-Polyacrylat- und / oder Polyacrylatbasis.

Es können auch solche Dispersionen auf der Basis von Polyestern, Polyurethanen, Polyethern, Polyamiden, Polyvinylestern, Polyvinylethern, Polysiloxanen, Polycarbonaten, und / oder Polyacrylaten, in den erfindungsgemäßen Beschichtungssystemen enthalten sein, die funktionelle Gruppen, wie Alkoxysilangruppen, Hydroxygruppen und / oder gegebenenfalls in blockierter Form vorliegende Isocyanatgruppen aufweisen. So können Dual-Cure-Systeme hergestellt werden, die über zwei verschiedene Mechanismen ausgehärtet werden können.

Ebenfalls für Dual-Cure-Systeme können dem erfindungsgemäßen Beschichtungssystem, weiterhin so genannte Vernetzter zugesetzt werden. Es kommen bevorzugt nicht blockierte und / oder blockierte Polyisocyanate, Polyaziridine, Polycarbodiimide sowie Melaminharze in Frage. Besonders bevorzugt sind nicht blockierte und / oder blockierte, hydrophilierte Polyisocyanate für wässrige Beschichtungsmittel. Bevorzugt werden ≤ 20 Gew.%, besonders bevorzugt ≤ 10 Gew.-% an festem Vernetzer auf den Festgehalt des Beschichtungsmittels zugesetzt.

Es können auch Dispersionen auf der Basis von Polyestern, Polyurethanen, Polyethern, Polyamiden, Polysiloxanen, Polyvinylethern, Polybutadienen, Polyisoprenen, Chlorkautschuken, Polycarbonaten, Polyvinylestern, Polyvinylchloriden, Polyacrylaten, Polyurethan-Polyacrylaten, Polyesteracrylaten, Polyetheracrylaten, Alkyden-, Polyepoxiden-, Polyepoxy(meth)acrylaten in den erfindungsgemäßen Beschichtungssystemen enthalten sein, die keine funktionellen Gruppen aufweisen. Damit kann der Grad der Vernetzungsdichte reduziert werden, die physikalische Trocknung beeinflusst, z. B. beschleunigt werden, oder eine Elastifizierung bzw. auch eine Haftungsanpassung vorgenommen werden.

Dem Beschichtungsmittel, das die erfindungsgemäßen wässrigen, strahlenhärtbaren Polyurethanacrylate enthält, können auch Aminovernetzerharze, auf Melamin- oder Harnstoffbasis und / oder Polyisocyanate mit freien oder mit blockierten Polyisocyanatgruppen, auf der Basis von gegebenenfalls hydrophilierenden Gruppen enthaltenden Polyisocyanaten aus Hexamethylendiisocyanat, Isophorondiisocyanat und / oder Toluylidendiisocyanat mit Urethan-, Uretdion-, Iminoxadiazindion-, Isocyanurat-, Biuret- und / oder Allophanatstrukturen zugesetzt sein. Als weitere Vernetzer sind auch Carbodiimide oder Polyaziridine möglich.

Die erfindungsgemäßen Beschichtungsmittel können mit den in der Lacktechnologie bekannten Bindemitteln, Hilfsstoffen und Additiven, wie z. B. Pigmente, Farbstoffe oder Mattierungsmittel versetzt bzw. kombiniert werden. Dies sind Verlaufs- und Benetzungsadditive, Slip-Additive, Pigmente einschließlich Metallic-Effektpigmente, Füllstoffe, Nanopartikel, Lichtschutzpartikel, Anti-Vergilbungsadditive, Verdicker und Additive zur Reduktion der Oberflächenspannung.

Die erfindungsgemäßen Beschichtungsmittel sind für die Beschichtungen von Folien geeignet, wobei zwischen oxidativer Trocknung und UV-Härtung eine Verformung der beschichteten Folie stattfindet.

Die erfindungsgemäßen Beschichtungsmittel sind für Klarlackanwendungen auf Holz- und Kunststoffsubstraten geeignet, bei denen es nach physikalischer Trocknung auf Blockfestigkeit und nach Strahlenhärtung auf gute Resistenzen gegen Chemikalien ankommt.

Besonders geeignet sind die erfindungsgemäßen Beschichtungsmittel in pigmentierten Formulierungen zur Herstellung von Beschichtungen für Holz und Kunststoffen.

Ganz besonders geeignet sind die erfindungsgemäßen Beschichtungsmittel in farbig und schwarz pigmentierten Formulierungen zur Herstellung von Beschichtungen für Holz und Kunststoffen.

Beschichtungsmittel enthaltend die erfindungsgemäßen, strahlenhärtbaren, wässrigen Dispersionen auf Polyurethanacrylatbasis, sowie Vernetzer auf der Basis von Aminoharzen, blockierten Polyisocyanaten, nicht blockierten Polyisocyanaten, Polyaziridinen und / oder Polycarbodiimiden, und / oder ein oder mehrere weitere Dispersionen, sind ebenfalls Gegenstand der vorliegenden Erfindung.

Weiterhin sind Substrate beschichtet mit den erfindungsgemäßen Beschichtungsmitteln ein Gegenstand dieser Erfindung.

### Beispiele

Der NCO-Gehalt wurde jeweils gemäß DIN 53185 titrimetrisch verfolgt.

Der Feststoffgehalt der Polyurethandispersion wurde gravimetrisch nach Abdampfen aller nichtflüchtigen Bestandteile gemäß DIN 53216 bestimmt.

Die mittlere Teilchengröße wurde durch Laser-Korrelationsspektroskopie ermittelt.

Die Auslaufzeit wurde gemäß DIN 53211 mit Hilfe des 4 mm DIN-Bechers bestimmt.

Die Bestimmung der OH-Zahl erfolgte gemäß DIN 53240 unter Verwendung von Essigsäureanhydrid, die der Iodzahl gemäß DIN 53241-1.

Raumtemperatur bedeutet 23 °C.

### 1) Polyester basierend auf ungesättigten Ölen.

In einem 51-Reaktor mit Destillationsaufsatz wurden 3200 g Rizinusöl und 1600 g Sojaöl sowie 2,4 g Lithiumhydroxid eingewogen. Ein Stickstoffstrom (5 l/h) wurde durch die Reaktanden geleitet. Innerhalb von 140 min wurde auf 240 °C aufgeheizt. Nach 7 h bei 240 °C wurde abgekühlt. OH-Zahl: 109 mg KOH/g Substanz, Säurezahl: 3,2 mg KOH/g Substanz, Iodzahl: 97 mg I₂/100 g Substanz.

### 2) Herstellung einer strahlenhärtbaren, wässrigen Polyurethandispersion (erfindungsgemäß)

168,9 Teile des Bisphenol-A-diglycidyldiacrylats AgiSyn^{®} 1010 (AGI Corp., Taipeh, Taiwan), Komponente A), 247,1 Teile des Polyesters 1), Komponente C), 32,0 Teile Dimethylolpropionsäure, Komponente E), 323,1 Teile 4.4'-Diisocyanatodicyclohexylmethan, Komponente F), und 0,7 Teile Dibutylzinndilaurat wurden in 220 Teilen Aceton gelöst und bis zu einem NCO-Gehalt von 4,0 Gew.-% bei 60 °C unter Rühren umgesetzt. Anschließend erfolgte die Neutralisation durch Zugabe und Unterrühren von 21,0 Teilen Triethylamin und die Zugabe von 78,6 Teilen des Ditrimethylolpropantetraacrylats Ebecryl^{®} 140 (Cytec Surface Specialties SA/NV, Drogenbos, Belgien), Komponente (ii). Die klare Lösung wurde unter Rühren in 1230 Teilen Wasser eingetragen. Daraufhin wurde eine Mischung aus 22,3 Teilen Ethylendiamin, Komponente G), und 84,0 Teilen Wasser der Dispersion unter Rühren zugesetzt. Im Anschluss wurde das Aceton unter leichtem Vakuum aus der Dispersion abdestilliert. Es wurde eine strahlenhärtbare, wässrige Polyurethandispersion 2) mit einem Feststoffgehalt von 37 Gew.-%, einer Auslaufzeit von 18 sec, einer mittleren Teilchengröße von 95 nm und einem pH-Wert von 8,4 erhalten.

### 3) Herstellung einer strahlenhärtbaren, wässrigen Polyurethandispersion (erfindungsgemäß)

37,3 Teile des Bisphenol-A-diglycidyldiacrylats AgiSyn^{®} 1010 (AGI Corp., Taipeh, Taiwan), Komponente A), 120,7 Teile des Polyesteracrylats AgiSyn^{®} 720 (AGI Corp., Taipeh, Taiwan), Komponente B), 109,8 Teile des Polyesters 1), Komponente C), 8,2 Teile Trimethylolpropan, Komponente D), 4,5 Teile 1,4-Butandiol, Komponente D), 22,1 Teile Dimethylolpropionsäure, Komponente E), 199,9 Teile 4.4'-Diisocyanatodicyclohexylmethan, Komponente F), und 0,6 Teile Dibutylzinndilaurat wurden in 175 Teilen Aceton gelöst und bis zu einem NCO-Gehalt von 1,9 Gew.-% bei 60 °C unter Rühren umgesetzt. Anschließend erfolgte die Neutralisation durch Zugabe und Unterrühren von 15,2 Teilen Triethylamin. Die klare Lösung wurde unter Rühren in 900 Teilen Wasser eingetragen. Daraufhin wurde eine Mischung aus 8,1 Teilen Ethylendiamin, Komponente G), und 24,0 Teilen Wasser der Dispersion unter Rühren zugesetzt. Im Anschluss wurde das Aceton unter leichtem Vakuum aus der Dispersion abdestilliert. Es wurde eine strahlenhärtbare, wässrige Polyurethandispersion 3) mit einem Feststoffgehalt von 40 Gew.-%, einer Auslaufzeit von 24 sec, einer mittleren Teilchengröße von 146 nm und einem pH-Wert von 8,8 erhalten.

### 4) Herstellung einer strahlenhärtbaren, wässrigen Polyurethandispersion (nicht erfindungsgemäß)

241,5 Teile des Bisphenol-A-diglycidyldiacrylats AgiSyn^{®} 1010 (AGI Corp., Taipeh, Taiwan), Komponente A), 127,27 Teile des Polyesters Desmophen^{®} PE 170 HN (Bayer MaterialScience AG, Leverkusen, DE), Komponente D), 5,25 Teile Neopentylglykol, Komponente D), 31,98 Teile Dimethylolpropionsäure, Komponente E), 323,10 Teile 4,4'-Diisocyanatodicyclohexylmethan, Komponente F), und 0,7 Teile Dibutylzinndilaurat wurden in 200 Teilen Aceton gelöst und bis zu einem NCO-Gehalt von 3,7 Gew.-% bei 50 °C unter Rühren umgesetzt. Der so erhaltenen Lösung wurde eine Mischung von 80,50 Teilen des propoxylierten Glycerintriacrylats OTA 480 (Cytec Surface Specialties SA/NV, Drogenbos, Belgien), Komponente (ii), und 78,32 Teilen des Ditrimethylolpropantetraacrylats Ebecryl^{®} 140 (Cytec Surface Specialties SA/NV, Drogenbos, Belgien), Komponente (ii), zugesetzt und untergerührt. Anschließend erfolgte die Neutralisation durch Zugabe und Unterrühren von 22,93 Teilen Triethylamin. Die klare Lösung wurde unter Rühren in 1150 Teilen Wasser eingetragen. Daraufhin wurde eine Mischung aus 22,36 Teilen Ethylendiamin, Komponente G), und 134,2 Teilen Wasser der Dispersion unter Rühren zugesetzt. Im Anschluss wurde das Aceton unter leichtem Vakuum aus der Dispersion abdestilliert. Es wurde eine strahlenhärtbare, wässrige Polyurethandispersion 4) mit einem Feststoffgehalt von 40 Gew.-%, einer Auslaufzeit von 34 sec, einer mittleren Teilchengröße von 125 nm und einem pH-Wert von 8,5 erhalten.

### 5) Herstellung des ungesättigten, mit Dicyclopentadien modifizierten Polyesterharzes, a1) aus EP-A 1 914 253

In einer Edelstahlapparatur mit elektrischer Heizung, innenliegender Kühlschlange, Ankerrührer, Rückflusskühler, Kolonne, Glasbrücke und Stickstoffeinleitung bzw. -überleitung wurden 42,47 Teile Maleinsäureanhydrid und 22,95 Teile Diethylenglykol eingewogen, mit Stickstoff inertisiert und unter Überleiten von Stickstoff sowie unter Ausnutzung der exothermen Reaktion in einer Stunde auf 150 °C erhitzt und bei dieser Temperatur eine Stunde gerührt, um die Halbesterbildung abzuschließen. Nach dem Abkühlen auf 140 °C wurden 16,45 Teile Dicyclopentadien zugegeben und der Ansatz vier Stunden bei 140 °C gehalten. Am Schluss wurden Säurezahl (205 +/- 5) und OH-Zahl (< 15) bestimmt. Dann wurden 5,95 Teile Ethylenglykol, 17,73 Teile Diethylenglykol und 0,2 Teile Toluhydrochinon zugegeben. Der Ansatz wurde so auf 190 °C aufgeheizt, dass die Kopftemperatur nicht über 105 °C ansteigt, und gehalten bis durch Veresterung eine Säurezahl von ca. 12 und eine Hydroxylzahl von 105 bis 125 mg KOH/g Substanz erreicht war. Nach Abkühlen auf 150°C wurden 0,1 Teile Toluhydrochinon und 0,03 Teile Trimethylhydrochinon zugesetzt. Dann wurde weiter auf 55 °C abgekühlt und in Aceton gelöst. Es resultierte eine 71%ige Lösung eines mit Dicyclopentadien modifizierten ungesättigten Polyesterharzes 5).

### 6) Herstellung einer strahlenhärtbaren, wässrigen Polyurethandispersion auf der Basis eines ungesättigten, mit Dicyclopentadien modifizierten Polyesterharzes, Beispiel 2) aus EP-A 1914 253 (nicht erfindungsgemäß)

158,4 Teile der in Beispiel 5) hergestellten acetonischen Lösung, 425,6 Teile des Polyesteracrylats Laromer^{®} PE 44 F (BASF AG, Ludwigshafen, DE), Komponente B), 26,8 Teile Dimethylolpropionsäure, Komponente E), 50,4 Teile Hexamethylendiisocyanat und 102,2 Teile Isophorondiisocyanat, Komponente F), und 0,6 Teile Dibutylzinndilaurat wurden in 180 Teilen Aceton gelöst und bis zu einem NCO-Gehalt von 1,6 Gew. -% bei 50 °C unter Rühren umgesetzt. Der so erhaltenen Polymerlösung wurden 20,2 Teile Triethylamin zugesetzt und untergerührt. Anschließend wurde die entstandene klare Lösung unter Rühren in 1100 Teile destilliertes Wasser eingetragen, und eine Mischung aus 10,2 Teilen Ethylendiamin, Komponente G) und 31,0 Teilen Wasser wurde der Dispersion unter Rühren zugesetzt. Das Aceton wurde unter leichtem Vakuum aus der Dispersion abdestilliert. Es wurde eine ungesättigte, mit Dicyclopentadien modifizierten Polyester enthaltende Polyurethandispersion 6) mit einem Feststoffgehalt von 40 Gew. -%, einer Auslaufzeit von 27 sec, einer mittleren Teilchengröße von ca. 112 nm und einem pH-Wert von 8,1 erhalten.

**Tabelle 1: Formulierungen für farbig pigmentierte Systeme**

| | **Gelb pigmentierter Lack [A-1] und rot pigmentierter Lack [A-2] ohne Sikkativ (Gewichtsteile)** | **Gelb pigmentierter Lack [A-3] und rot pigmentierter Lack [A-4] mit Sikkativ (Gewichtsteile)** |
|---|---|---|
| UV-Dispersion¹ | 100,0 | 100,0 |
| BYK^{®} 093² | 0,4 | 0,4 |
| BYK^{®} 346³ | 0,3 | 0,3 |
| Borchi^{®} Oxy Coat⁴ | - | 0,1 |
| Acematt^{®} TS 100⁵ | 0,5 | 0,5 |
| Aquamatt^{®} 208⁶ | 2,0 | 2,0 |
| Irgacure^{®} 500⁷ | 0,5 | 0,5 |
| Irgacure^{®} 819 DW⁸ | 1,0 | 1,0 |
| Tafigel^{®} PUR 50⁹ | 1,6 | 1,6 |
| Pigment Xfast^{®} (gelb oder rot)¹⁰ | 5,9 | 5,9 |
| Wasser | 11,2 | 11,2 |
| Gesamt | 123,4 | 123,5 |

| | | |
|---|---|---|
| ¹ Angepasst auf 35% Festkörper mit Wasser/Butylglykol = 1/1 ² Entschäumer auf Polysiloxanbasis der Fa. BYK, Wesel, DE ³ Verlaufsmittel auf der Basis eines polyethermodifizierten, hydroxyfunktionellen Polydimethylsiloxans der Fa. BYK, Wesel, DE ⁴ Sikkativ für die oxidative Trocknung auf Eisenbasis der Fa. OMG Borchers GmbH, Langenfeld, DE ⁵ Mattierungsmittel auf Kieselsäurebasis der Fa. Evonik Industries AG, Essen, DE ⁶ Wässrige Dispersion eines Polyethylenwachses der Fa. BYK, Wesel, DE ⁷ eine Mischung von Benzophenon und (1-Hydroxycyclohexyl)phenylketon der Fa. Ciba, Lampertheim, DE ⁸ Phenylbis-(2,4,6-trimethylbenzoyl)-phosphinoxid der Fa. Ciba, Lampertheim, DE ⁹ Verdicker auf Polyurethanbasis der Fa. Münzing Chemie GmbH, Heilbronn, DE ¹⁰ Gelbes Pigment: Xfast^{®} Gelb 1256 (Arylidgelb), rotes Pigment: Xfast^{®} Rot 3860 (Diketo-Pyrrolo-Pyrrol) der Fa. BASF SE, Ludwigshafen, DE | | |

**Tabelle 2: Applikations- und Härtungsbedingungen für farbig pigmentierte Systeme**

| | **Pigmentierte Lacke** |
|---|---|
| | **[A-1], [A-2], [A-3], [A-4]** |
| **Substrat** | Holz |
| **Auftrag durch Rakeln** | Kastenrakel, 2 x 150 µm, Nassfilm |
| **Thermische Trocknung** | 10 min, 50 °C |
| **Strahlenhärtung** | 3 m/min (Ga + Hg), 80 W |

Nach der thermischen Trocknung zur Verdunstung des Wassers waren die Beschichtungen der Beispiele 2, 3 und 4 sehr blockfest, d. h. ein Finger konnte auf die Beschichtung gedrückt werden, ohne dass ein Abdruck hinterlassen wurde. Die Beschichtung aus Beispiel 6 war noch leicht klebrig und entsprechend empfindlich gegen Staub oder mechanische Zerstörung. Nach der Strahlenhärtung wurden die beschichteten Substrate drei Tage bei Raumtemperatur gelagert und anschließend den Prüfungen unterzogen. Während der drei Tage bei Raumtemperatur fand die oxidative Härtung durch Luftsauerstoff statt.

**Tabelle 3: Daten zur anwendungstechnischen Prüfung des gelb pigmentierten Lackes ohne Sikkativ [A-1], 1 h nach der Strahlenhärtung, vor der oxidativer Härtung**

| **Anwendungstechnische Prüfung¹¹** | | | | |
|---|---|---|---|---|
| UV-Dispersion | **Beispiel 2** | **Beispiel 3** | **Beispiel 4 (Vergleich)** | **Beispiel 6 (**EP-A 1 914 253**)** |
| Wasserfestigkeit, 16 h | 4 | 4 | 4 | 3 |
| Kaffeebeständigkeit, 16 h | 3 | 3 | 4 | 3 |
| Rotweinbeständigkeit, 16 h | 3 | 3 | 4 | 3 |
| Ethanol/Wasser(50%)-Beständigkeit, 6 h | 3 | 3 | 3 | 1 |
| Ethanol/Wasser(50%)-Beständigkeit, 16 h | 3 | 3 | 3 | 1 |

| | | | | |
|---|---|---|---|---|
| ¹¹ Die Beständigkeitseigenschaften werden nach der Belastung (Dauer in Stunden) durch optische Inaugenscheinnahme beurteilt: | | | | |

Note 5: Keine sichtbaren Veränderungen (keine Beschädigung).
Note 4: Leichte Glanz- oder Farbtonveränderung, nur sichtbar, wenn sich die Lichtquelle in der Prüfoberfläche auf oder dicht neben der Markierung spiegelt und direkt zum Auge des Betrachters reflektiert wird, oder einige eben erkennbare, abgegrenzte Markierungen (Quellungsring erkennbar, bzw. keine Erweichung mit dem Fingernagel erkennbar).
Note 3: Leichte Markierung aus mehreren Blickwinkeln zu sehen, zum Beispiel ein eben erkennbarer fast völliger Kreis oder Kreisfläche (Quellungsring erkennbar, Kratzspuren des Fingernagels erkennbar)
Note 2: Starke Markierung, die Oberflächenstruktur ist jedoch weitgehend unverändert. (geschlossener Quellungsring, Kratzspuren feststellbar).
Note 1: Starke Markierung, die Oberflächenstruktur ist jedoch weitgehend unverändert, Markierung ist bis zum Untergrund durchkratzbar.

Zur oxidativen Härtung wurden die Beschichtungen drei Tage bei Raumtemperatur gelagert.

**Tabelle 4: Daten zur anwendungstechnischen Prüfung des gelb pigmentierten Lackes ohne Sikkativ [A-1], nach Strahlenhärtung und oxidativer Härtung**

| **Anwendungstechnische Prüfung¹²** | | | | |
|---|---|---|---|---|
| UV-Dispersion | **Beispiel 2** | **Beispiel 3** | **Beispiel 4 (Vergleich)** | **Beispiel 6 (**EP-A 1 914 253**)** |
| Wasserfestigkeit, 16 h | 4 | 4 | 4 | 3 |
| Kaffeebeständigkeit, 16 h | 5 | 5 | 5 | 3 |
| Rotweinbeständigkeit, 16 h | 5 | 4 | 4 | 3 |
| Ethanol/Wasser(50%)-Beständigkeit, 6 h | 4 | 3 | 3 | 1 |
| Ethanol/Wasser(50%)-Beständigkeit, 16 h | 4 | 3 | 3 | 1 |

| | | | | |
|---|---|---|---|---|
| ¹² siehe Fußnote 11, Tabelle 3 | | | | |

**Tabelle 5: Daten zur anwendungstechnischen Prüfung des gelb pigmentierten Lackes mit Sikkativ [A-3], nach Strahlenhärtung und oxidativer Härtung**

| **Anwendungstechnische Prüfung¹³** | | | | |
|---|---|---|---|---|
| UV-Dispersion | **Beispiel 2** | **Beispiel 3** | **Beispiel 4 (Vergleich)** | **Beispiel 6 (**EP-A 1 914 253**)** |
| Wasserfestigkeit, 16 h | 5 | 5 | 4 | 3 |
| Kaffeebeständigkeit, 16 h | 5 | 5 | 5 | 3 |
| Rotweinbeständigkeit, 16 h | 5 | 5 | 4 | 3 |
| Ethanol/Wasser(50%)-Beständigkeit, 6 h | 5 | 4 | 3 | 1 |
| Ethanol/Wasser(50%)-Beständigkeit, 16 h | 4 | 3 | 3 | 1 |

| | | | | |
|---|---|---|---|---|
| ¹³ siehe Fußnote 11, Tabelle 3 | | | | |

**Tabelle 6: Daten zur anwendungstechnischen Prüfung des rot pigmentierten Lackes ohne Sikkativ [A-2], nach Strahlenhärtung und oxidativer Härtung**

| **Anwendungstechnische Prüfung¹⁴** | | | | |
|---|---|---|---|---|
| UV-Dispersion | **Beispiel 2** | **Beispiel 3** | **Beispiel 4 (Vergleich)** | **Beispiel 6 (**EP-A 1 914 253**)** |
| Wasserfestigkeit, 16 h | 4 | 4 | 4 | 3 |
| Kaffeebeständigkeit, 16 h | 5 | 5 | 5 | 3 |
| Rotweinbeständigkeit, 16 h | 5 | 4 | 4 | 3 |
| Ethanol/Wasser(50%)-Beständigkeit, 6 h | 4 | 3 | 3 | 1 |
| Ethanol/Wasser(50%)-Beständigkeit, 16 h | 3 | 3 | 3 | 1 |

| | | | | |
|---|---|---|---|---|
| 14 siehe Fußnote 11, Tabelle 3 | | | | |

**Tabelle 7: Daten zur anwendungstechnischen Prüfung des rot pigmentierten Lackes mit Sikkativ [A-4], nach Strahlenhärtung und oxidativer Härtung**

| **Anwendungstechnische Prüfung¹⁵** | | | | |
|---|---|---|---|---|
| UV-Dispersion | **Beispiel 2** | **Beispiel 3** | **Beispiel 4 (Vergleich)** | **Beispiel 6 (**EP-A 1 914 253**)** |
| Wasserfestigkeit, 16 h | 5 | 5 | 4 | 3 |
| Kaffeebeständigkeit, 16 h | 5 | 5 | 5 | 3 |
| Rotweinbeständigkeit, 16 h | 5 | 5 | 4 | 3 |
| Ethanol/Wasser(50%)-Beständigkeit, 6 h | 5 | 4 | 3 | 1 |
| Ethanol/Wasser(50%)-Beständigkeit, 16 h | 5 | 3 | 3 | 1 |

| | | | | |
|---|---|---|---|---|
| ¹⁵ siehe Fußnote 11, Tabelle 3 | | | | |

Tabelle 3 zeigt die chemischen Beständigkeit direkt nach der Strahlenhärtung. Eine oxidative Härtung hat zu diesem Zeitpunkt kaum stattgefunden. Die Beschichtungen der erfindungsgemäßen Beispiele 1 und 2 weisen schon recht gute Beständigkeiten auf und liegen auf dem Niveau des Vergleichsbeispiels 4. Die Beschichtungen von rein oxidativ trocknenden Systemen, wie z. B. die von Alkydharzen oder Alkydharz-basierten, wässrigen Polyurethandispersionen, sind erfahrungsgemäß zu diesem Zeitpunkt noch sehr weich, daher wurde die Prüfung der mechanischen und chemischen Beständigkeiten mit diesen Systemen nicht durchgeführt.

Substrate, welche mit den erfindungsgemäßen Bindemitteln beschichtet sind, können bereits montiert werden und härten im Lager oder während des Transports weiter oxidativ nach.

Der Effekt der oxidativen Härtung, welche drei Tage nach der Strahlenhärtung bei Raumtemperatur erfolgt, wird in den Tabellen 4 bis 7 gezeigt. Die erfindungsgemäßen Beispiele 2 und 3 zeigen sowohl im gelben als auch im roten Lack ohne Sikkativ bessere Beständigkeiten als die Vergleichsbeispiele 4 und 6 (Tabellen 4 und 6). Dies wird insbesondere bei Wasser/Ethanol (50%) deutlich. Es sei noch mal betont, dass Beispiel 4 zwar auf Polyepoxyacrylat beruht, aber keine ungesättigte Fettsäuren enthaltende Polyester enthalten sind. Dadurch wird der Vorteil der Kombination aus Polyepoxyacrylat und ungesättigte Fettsäuren enthaltende Polyester wie in den Beispielen 2 und 3 deutlich.

Durch den Zusatz von Sikkativ (Tabellen 5 und 7) werden die Beständigkeiten der Beispiele 2 und 3 noch besser, wohingegen bei den Beispielen 4 und 6 keine Verbesserung zu sehen ist, da sie keine oxidativ härtbaren Gruppen enthalten. Der Zusatz an Sikkativ beschleunigt die oxidative Härtung. Die Beschichtungen ohne Sikkativ werden nach längerer Zeit zu ähnlichen guten Ergebnissen kommen.

Ebenfalls wird deutlich, dass die höheren Anteile an aromatischem Polyepoxyacrylat und ungesättigte Fettsäuren enthaltendem Polyester in Beispiel 2 im Vergleich zu Beispiel 3 zu besseren Beständigkeiten führen.

## Patentansprüche

1. Strahlenhärtbare, wässrige Dispersionen auf der Basis von Polyurethanacrylaten (i) **dadurch gekennzeichnet, dass** das Polyurethanacrylat (i) als Aufbaukomponenten
A) eine oder mehrere aromatische Polyepoxy(meth)acrylate mit einer OH-Zahl von 20 bis 300 mg KOH/g Substanz,
C) ein oder mehrere Oligo- oder Polyester enthaltend ungesättigte Fettsäuren mit einer OH-Zahl von 15 bis 300 mg KOH/g Substanz und einer Iodzahl von größer 50 g I₂/100 g Substanz,
E) eine oder mehrere Verbindungen mit mindestens einer gegenüber Isocyanat reaktiven Gruppe und zusätzlich mindestens einer hydrophilierend wirkenden Gruppe und
F) ein oder mehrere organische Polyisocyanate
enthält.

2. Strahlenhärtbare, wässrige Dispersionen auf der Basis von Polyurethanacrylaten (i) gemäß Anspruch 1, **dadurch gekennzeichnet, dass** eine Komponente B) mit mindestens einer gegenüber Isocyanat reaktiven Gruppe und mindestens einer strahlenhärtbaren Doppelbindung enthalten ist, die von A) verschieden ist.

3. Strahlenhärtbare, wässrige Dispersionen auf der Basis von Polyurethanacrylaten (i) gemäß Anspruch 1 oder 2, **dadurch gekennzeichnet, dass** eine Komponente D) enthalten ist, die eine oder mehrere Verbindungen mit mindestens einer gegenüber Isocyanat reaktiven Gruppe aber weder strahlenhärtbaren noch oxidativ härtbaren Doppelbindungen besitzt.

4. Strahlenhärtbare, wässrige Dispersionen auf der Basis von Polyurethanacrylaten (i) gemäß einem der Ansprüche 1 bis 3, **dadurch gekennzeichnet, dass** eine Komponente G) mit mindestens einer Aminfunktion enthalten ist, die von A) bis F) verschieden ist.

5. Strahlenhärtbare, wässrige Dispersionen auf der Basis von Polyurethanacrylaten (i) gemäß einem der Ansprüche 1 bis 4, **dadurch gekennzeichnet, dass** die wässrige Dispersion als Komponente (ii), einen Reaktivverdünner mit mindestens einer radikalisch polymerisierbaren Gruppe enthält.

6. Strahlenhärtbare, wässrige Dispersionen gemäß einem der Ansprüche 1 bis 5, **dadurch gekennzeichnet, dass** Komponente A) das Umsetzungsprodukt von (Meth)acrylsäure mit aromatischen Glycidylethern, die ausgewählt sind aus der Gruppe bestehend aus monomeren, oligomeren oder polymerem Bisphenol-A und/oder Bisphenol-F oder deren alkoxylierten Derivaten, enthält.

7. Strahlenhärtbare, wässrige Dispersionen gemäß einem der Ansprüche 1 bis 6, **dadurch gekennzeichnet, dass** Komponente C) Ver- und Umesterungsprodukte von ungesättigten Fettsäuren und/oder ungesättigten Ölen mit mindestens bifunktionellen Polyolverbindungen enthält oder das Umesterungsprodukt aus Rizinusöl und einem oder mehreren Ölen mit einer Jodzahl größer 100 ist.

8. Strahlenhärtbare, wässrige Dispersionen gemäß einem der Ansprüche 1 bis 7, **dadurch gekennzeichnet, dass** Komponente C) das Umesterungsprodukt aus Rizinusöl und Sojabohnenöl ist.

9. Strahlenhärtbare, wässrige Dispersionen gemäß einem der Ansprüche 1 bis 8, **dadurch gekennzeichnet, dass** diese frei von ungesättigten, mit Dicyclopentadien modifizierten Polyesterharz sind.

10. Strahlenhärtbare, wässrige Dispersionen gemäß einem der Ansprüche 1 bis 9, **dadurch gekennzeichnet, dass** Komponente A) zu 5 bis 45 Gew.-% und Komponente C) zu 15 bis 65 Gew.-% enthalten sind.

11. Verfahren zur Herstellung der strahlenhärtbaren, wässrigen Dispersionen auf der Basis von Polyurethanacrylaten (i) gemäß einem der Ansprüche 1 bis 10 , **dadurch gekennzeichnet, dass** durch Umsetzen der Komponenten A) bis E) in einem oder mehreren Reaktionsschritten mit Komponente F) ein Polyurethanacrylat (i) erhalten wird, wobei ein Neutralisationsmittel zur Erzeugung der für die Dispergierung notwendigen ionischen Gruppen vor, während oder nach der Herstellung des Additionsproduktes von A) bis F) zugegeben werden kann, gefolgt von einem Dispergierschritt durch Zugabe von Wasser zum Additionsprodukt von A) bis F) oder Überführen des Additionsproduktes von A) bis F) in eine wässrige Vorlage, wobei vor, während oder nach der Dispergierung eine Kettenverlängerung mittels Komponente G) erfolgen kann.

12. Verwendung der erfindungsgemäßen strahlenhärtbaren, wässrigen Dispersionen gemäß einem der Ansprüche 1 bis 11 zur Herstellung von Beschichtungen insbesondere von Lacken und Klebstoffen.

13. Beschichtungsmittel enthaltend die erfindungsgemäßen strahlenhärtbaren, wässrigen Dispersionen gemäß einem der Ansprüche 1 bis 12 auf Polyurethanacrylatbasis.

14. Verwendung der Beschichtungsmittel gemäß Anspruch 13 in pigmentierten Formulierungen zur Beschichtung von Holz und Kunststoffen.

15. Substrate beschichtet mit Beschichtungsmitteln gemäß Anspruch 13.

## Claims

1. Radiation-curable aqueous dispersions based on polyurethane acrylates (i), **characterized in that** the polyurethane acrylate (i) comprises as builder components
A) one or more aromatic polyepoxy(meth)acrylates with an OH number of from 20 to 300 mg of KOH/g of substance,
C) one or more oligo- or polyesters containing unsaturated fatty acids with an OH number of from 15 to 300 mg of KOH/g of substance and an iodine number of greater than 50 g of I₂/100 g of substance,
E) one or more compounds with at least one group which is reactive towards isocyanate and additionally at least one group having a hydrophilizing action and
F) one or more organic polyisocyanates.

2. Radiation-curable aqueous dispersions based on polyurethane acrylates (i), according to claim 1, **characterized in that** they contain a component B) which differs from A) and has at least one group which is reactive towards isocyanate and at least one radiation-curable double bond.

3. Radiation-curable aqueous dispersions based on polyurethane acrylates (i), according to claim 1 or 2, **characterized in that** they contain a component D) which has one or more compounds with at least one group which is reactive towards isocyanate, but neither radiation-curable nor oxidatively curable double bonds.

4. Radiation-curable aqueous dispersions based on polyurethane acrylates (i), according to one of claims 1 to 3, **characterized in that** they contain a component G) which differs from A) to F) and has at least one amine function.

5. Radiation-curable aqueous dispersions based on polyurethane acrylates (i), according to one of claims 1 to 4, **characterized in that** the aqueous dispersion contains as component (ii) a reactive diluent with at least one group which can undergo free radical polymerization.

6. Radiation-curable aqueous dispersions according to one of claims 1 to 5, **characterized in that** component A) comprises the reaction product of (meth)acrylic acid with aromatic glycidyl ethers which are chosen from the group consisting of monomeric, oligomeric or polymeric bisphenol A and/or bisphenol F or alkoxylated derivatives thereof.

7. Radiation-curable aqueous dispersions according to one of claims 1 to 6, **characterized in that** component C) comprises esterification and transesterification products of unsaturated fatty acids and/or unsaturated oils with at least bifunctional polyol compounds or is the transesterification product of castor oil and one or more oils with an iodine number of greater than 100.

8. Radiation-curable aqueous dispersions according to one of claims 1 to 7, **characterized in that** component C) is the transesterification product of castor oil and soy bean oil.

9. Radiation-curable aqueous dispersions according to one of claims 1 to 8, **characterized in that** these are free from unsaturated dicyclopentadiene-modified polyester resin.

10. Radiation-curable aqueous dispersions according to one of claims 1 to 9, **characterized in that** they contain component A) to the extent of 5 to 45 wt.% and component C) to the extent of 15 to 65 wt.%.

11. Process for the preparation of the radiation-curable aqueous dispersions based on polyurethane acrylates (i), according to one of claims 1 to 10, **characterized in that** a polyurethane acrylate (i) is obtained by reaction of components A) to E) with component F) in one or more reaction steps, it being possible for a neutralizing agent to be added before, during or after the preparation of the addition product of A) to F) to produce the ionic groups necessary for the dispersing operation, followed by a dispersing step by addition of water to the addition product of A) to F) or transfer of the addition product of A) to F) into an aqueous reservoir, it being possible for chain lengthening by means of component G) to be carried out before, during or after the dispersing.

12. Use of the radiation-curable aqueous dispersions according to the invention according to one of claims 1 to 11 for the production of coatings, in particular of lacquers and adhesives.

13. Coating compositions comprising the radiation-curable aqueous dispersions according to the invention according to one of claims 1 to 12 based on polyurethane acrylate.

14. Use of the coating compositions according to claim 13 in pigmented formulations for coating of wood and plastics.

15. Substrates coated with coating compositions according to claim 13.

## Revendications

1. Dispersions aqueuses, durcissables par un rayonnement à base de polyuréthane-acrylates (i), **caractérisées en ce que** le polyuréthane-acrylate (i) contient, comme constituants constitutifs
A) un ou plusieurs polyépoxy(méth)acrylates aromatiques présentant un indice d'OH de 20 à 300 mg de KOH/g de substance,
C) un ou plusieurs oligoesters ou polyesters contenant des acides gras insaturés présentant un indice d'OH de 15 à 300 mg de KOH/g de substance et un indice d'iode supérieur à 50 g d'I₂/100 g de substance,
E) un ou plusieurs composés présentant au moins un groupe réactif par rapport à isocyanate et en plus au moins un groupe à action hydrophile et
F) un ou plusieurs polyisocyanates organiques.

2. Dispersions aqueuses, durcissables par un rayonnement à base de polyuréthane-acrylates (i) selon la revendication 1, **caractérisées en ce qu'**un composant B) est contenu, présentant au moins un groupe réactif par rapport à isocyanate et au moins une double liaison durcissable par un rayonnement, qui est différent de A).

3. Dispersions aqueuses, durcissables par un rayonnement à base de polyuréthane-acrylates (i) selon la revendication 1 ou 2, **caractérisées en ce qu'**un composant D) est contenu, présentant un ou plusieurs composés présentant au moins un groupe réactif par rapport à isocyanate mais pas de doubles liaisons durcissables par un rayonnement ni durcissables par oxydation.

4. Dispersions aqueuses, durcissables par un rayonnement à base de polyuréthane-acrylates (i) selon l'une quelconque des revendications 1 à 3, **caractérisées en ce qu'**un composant G) présentant au moins une fonction amine est contenu, qui est différent de A) à F).

5. Dispersions aqueuses, durcissables par un rayonnement à base de polyuréthane-acrylates (i) selon l'une quelconque des revendications 1 à 4, **caractérisées en ce que** la dispersion aqueuse contient, comme composant (ii), un diluant réactif présentant au moins un groupe polymérisable par voie radicalaire.

6. Dispersions aqueuses, durcissables par un rayonnement selon l'une quelconque des revendications 1 à 5, **caractérisées en ce que** le composant A) contient le produit de transformation de l'acide (méth)acrylique avec des glycidyléthers aromatiques, qui sont choisis dans le groupe constitué par le bisphénol-A et/ou le bisphénol-F monomère, oligomère ou polymère ou leurs dérivés alcoxylés.

7. Dispersions aqueuses, durcissables par un rayonnement selon l'une quelconque des revendications 1 à 6, **caractérisées en ce que** le composant C) contient des produits d'estérification et de transestérification d'acides gras insaturés et/ou d'huiles insaturées par des composés polyol au moins difonctionnels ou le produit de transestérification d'huile de ricin et d'une ou de plusieurs huiles présentant un indice d'iode supérieur à 100.

8. Dispersions aqueuses, durcissables par un rayonnement selon l'une quelconque des revendications 1 à 7, **caractérisées en ce que** le composant C) est le produit de transestérification d'huile de ricin et d'huile de graines de soja.

9. Dispersions aqueuses, durcissables par un rayonnement selon l'une quelconque des revendications 1 à 8, **caractérisées en ce qu'**elles sont exemptes de résine de polyester insaturée, modifiée par du dicyclopentadiène.

10. Dispersions aqueuses, durcissables par un rayonnement selon l'une quelconque des revendications 1 à 9, **caractérisées en ce que** le composant A) est contenu à raison de 5 à 45% en poids et le composant C) à raison de 15 à 65% en poids.

11. Procédé pour la préparation des dispersions aqueuses, durcissables par un rayonnement à base de polyuréthane-acrylates (i) selon l'une quelconque des revendications 1 à 10, **caractérisé en ce qu'**un polyuréthane-acrylate (i) est obtenu par transformation des composants A) à E) en une ou plusieurs étapes de réaction avec le composant F), un agent de neutralisation pouvant être ajouté avant, pendant ou après la préparation du produit d'addition de A) à F) en vue d'obtenir les groupes ioniques nécessaires pour la dispersion, suivie d'une étape de dispersion par addition d'eau au produit d'addition de A) à F) ou par transfert du produit d'addition de A) à F) dans une charge préalable aqueuse, un allongement de chaîne au moyen du composant G) pouvant avoir lieu avant, pendant ou après la dispersion.

12. Utilisation des dispersions aqueuses, durcissables par un rayonnement selon l'invention selon l'une quelconque des revendications 1 à 11 pour la préparation de revêtements, en particulier de laques et d'adhésifs.

13. Agents de revêtement contenant les dispersions aqueuses, durcissables par un rayonnement selon l'invention selon l'une quelconque des revendications 1 à 12 à base de polyuréthane-acrylate.

14. Utilisation des agents de revêtement selon la revendication 13 dans des formulations pigmentées pour le revêtement de bois et de matériaux synthétiques.

15. Substrats revêtus par des agents de revêtement selon la revendication 13.
